# EUROPEAN PATENT SPECIFICATION

(11) **EP 4 593 262 B1**
(45) Date of publication and mention of the grant of the patent: **07.10.2026**
(21) Application number: 25153932.6
(22) Date of filing: 24.01.2025
(51) Int. Cl.: H02K 9/06, H02K 9/19

(54) **ROTOR COOLING WITH AIR AND OIL MIXTURE**
ROTORKÜHLUNG MIT LUFT-ÖL-GEMISCH
REFROIDISSEMENT DE ROTOR AVEC MÉLANGE D'AIR ET D'HUILE

(30) Priority: 27.01.2024 US 202463625960 P
(43) Date of publication of application: 30.07.2025
(73) Proprietor: Borgwarner Inc., Auburn Hills, Michigan 48326 (US)
(72) Inventor: DIKO, Andi, Auburn Hills, MI, 48326 (US); MAYER, Andreas WP, Clarkston, MI, 48346 (US); ISHIHARA, Mitsuru, Rochester Hills, MI, 48304 (US); NAKHATE, Prathamesh, Ann Arbor, MI, 48105 (US)
(74) Representative: Peterreins Schley

(56) References cited:
- WO-A1-2023/062307
- CN-A- 113 519 107
- CN-A- 116 613 913
- US-A1- 2022 263 384
- US-A1- 2022 360 133
- US-A1- 2023 299 642

## Description

### BACKGROUND OF THE INVENTION

### 1. Field of the Invention

The subject invention relates to a rotor assembly, in particular, a rotor assembly for use in an electric machine, as well as to an electric machine comprising the rotor assembly.

### 2. Description of Related Art

Typical electric machines, such as for use in a vehicle, include a rotor assembly including a rotor extending along and rotatable about a rotor axis, a shaft extending along the rotor axis, and a stator coupled to and disposed about the rotor with respect to the rotor axis. As performance and efficiency demands continue to increase for vehicles, the demand on electric machines has increased. For example, with higher output from electric machines, desired rotational speed of the shaft has increased, which then increases the need for improved cooling and balancing of the electric machine and, in particular, the rotor assembly.

WO 2023/062307 A1 relates to an end shield comprising through-openings for a rotor of an electric machine and to a rotor comprising the end shield. The rotor comprises a rotor mass with at least one recess for circulation of cooling fluid. CN 116 613 913 A describes a cooling system for an electric motor. CN 113 519 107 A relates to an electric motor that uses oil circulation to directly cool a shaft and a rotor. US 2022/263384 A1 relates to thermal management techniques for an electric motor of a vehicle.

To this end, there remains a need for an improved rotor assembly for an electric machine.

### SUMMARY OF THE INVENTION

The present disclosure relates to a rotor assembly for use in an electric machine as defined in claim 1, and to an electric machine as defined in claim 14. The dependent claims depict preferred embodiments of the rotor assembly and the electric machine. According to an aspect of the present disclosure, a rotor assembly for use in an electric machine includes a rotor extending along and adapted to be rotatable about a rotor axis. The rotor has a first rotor end and a second rotor end spaced from the first rotor end with respect to the rotor axis. The rotor defines a first cooling duct extending from the first rotor end to the second rotor end, and a second cooling duct extending from the first rotor end to the second rotor end. The rotor assembly includes a first impeller coupled to the first rotor end. The first impeller defines an inlet opening aligned with the first cooling duct, and an outlet opening aligned with the second cooling duct. The rotor assembly also includes a second impeller coupled to the second rotor end such that the rotor is disposed between the first impeller and the second impeller with respect to the rotor axis. The second impeller defines an inlet opening aligned with the second cooling duct and the outlet opening of the first impeller, and an outlet opening aligned with the first cooling duct and the inlet opening of the first impeller. The rotor assembly further includes a first oil channel configured to direct oil to the first cooling duct adjacent the first impeller, and a second oil channel configured to direct oil to the second cooling duct adjacent the second impeller. The first oil channel is fluidly coupled with the first cooling duct such that oil and air are mixed within the first cooling duct during operation of the rotor assembly, and the second oil channel is fluidly coupled with the second cooling duct such that oil and air are mixed within the second cooling duct during operation of the rotor assembly.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1 is a perspective view of an electric machine including a rotor assembly.
FIG. 2 is a perspective view of the electric machine with a housing of the electric machine removed.
FIG. 3 is a front view of the electric machine.
FIG. 4 is an exploded view of the rotor assembly, with the rotor assembly including a rotor extending along a rotor axis, a first impeller, and a second impeller.
FIG. 5 is a perspective view of the first and second impellers illustrating air flow through cooling ducts defined by the rotor.
FIG. 6 is a front view of the first impeller.
FIG. 7 is a rear view of the first impeller.
FIG. 8 is a rear view of the second impeller.
FIG. 9 is a front view of the second impeller.
FIG. 10 is a perspective view of another embodiment of the first and second impellers.
FIG. 11 is a front view of the first impeller of FIG. 10.
FIG. 12 is a rear view of the first impeller of FIG. 10.
FIG. 13 is a rear view of the second impeller of FIG. 10.
FIG. 14 is a front view of the second impeller of FIG. 10.
FIG. 15 is a perspective view of the first impeller of FIG. 10.
FIG. 16 is a perspective view of the second impeller of FIG. 10.
FIG. 17 is a rear view of the second impeller of FIG. 8.
FIG. 18 is a rear view of the second impeller of FIG. 13.
FIG. 19 is a cross-sectional view of the rotor assembly, with the rotor assembly including a first oil channel configured to direct oil to the first cooling duct adjacent the first impeller, and a second oil channel configured to direct oil to said second cooling duct adjacent said second impeller.
FIG. 20 is a cross-sectional view of another embodiment of the rotor assembly of FIG. 19.

### DETAILED DESCRIPTION OF THE INVENTION

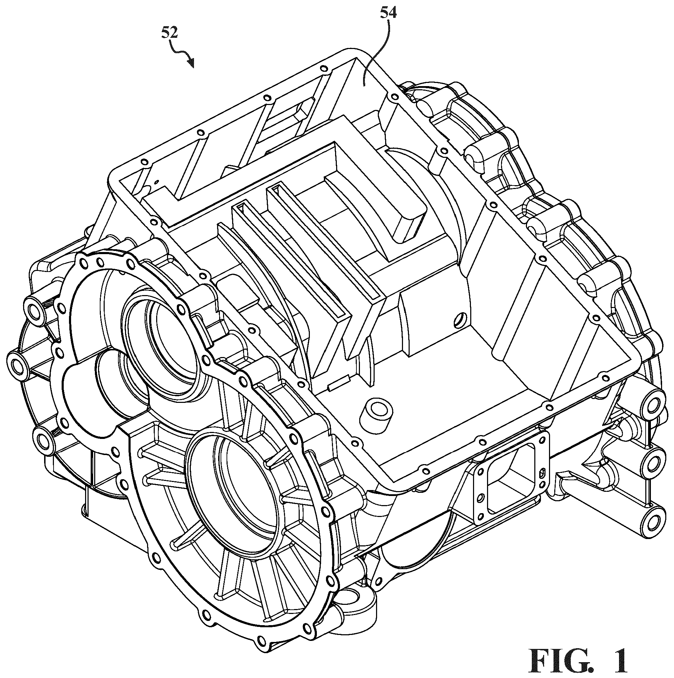

With reference to the Figures, wherein like numerals indicate like parts throughout the several views, a rotor assembly 50 for use in an electric machine 52 is shown in FIG. 1. The electric machine 52 may include a machine housing 54 defining a machine housing interior.

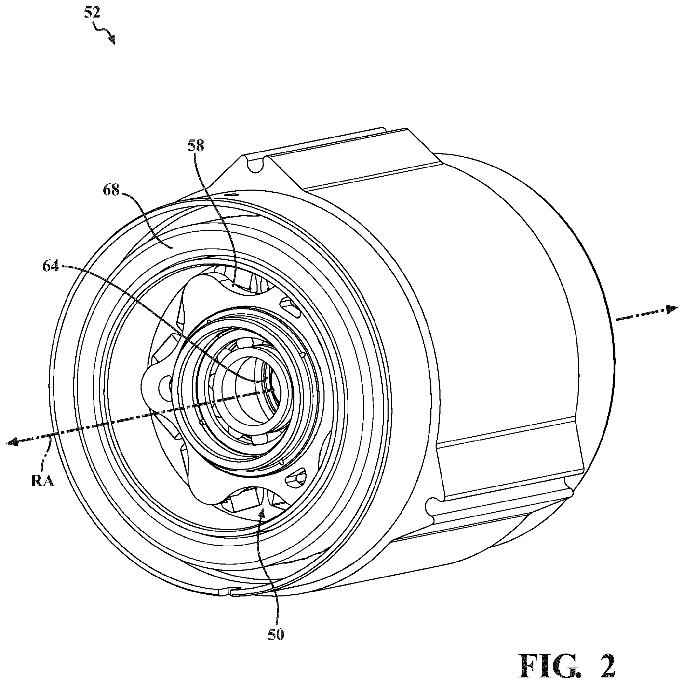

With reference to FIGS. 2-4, the rotor assembly 50 includes a rotor 58 that extends along and is adapted to be rotatable about a rotor axis RA. The rotor 58 has a first rotor end 60 and a second rotor end 62 spaced from the first rotor end 60 with respect to the rotor axis RA. The rotor 58 may be comprised of lamination stacks.

The electric machine 52 includes the rotor assembly 50, a shaft 64 extending along the rotor axis RA, wherein the rotor 58 defines a rotor interior 66 and the shaft 64 is disposed in the rotor interior 66 and coupled to the rotor 58, and a stator 68 coupled to and disposed about the rotor 58 with respect to the rotor axis RA. The shaft 64 may be integral with the rotor 58 (i.e., one-piece) or the shaft 64 may be a separate component from the rotor 58 (i.e., two or more components).

The rotor assembly 50 and, therefore, the electric machine 52, may be used in any suitable application, such as in a vehicle, traction electric machines, turbomachinery, boats, trains, and the like. The electric machine 52 may be used in any tractive and/or electrical power generating. In other words, the electric machine 52 may be configured as a motor and/or a generator. The rotor 58 and, therefore, the shaft 64 may be configured to rotate greater than 18,000 RPM, greater than 19,000 RPM, greater than 20,000 RPM, greater than 21,000 RPM, greater than 22,000 RPM, greater than 23,000 RPM, greater than 24,000 RPM, greater than 25,000 RPM, greater than 26,000 RPM, and/or greater than 27,000 RPM during operation of the electric machine 52.

The rotor 58 defines a first cooling duct 70 extending from the first rotor end 60 to the second rotor end 62, and a second cooling duct 72 extending from the first rotor end 60 to the second rotor end 62.

The rotor assembly also includes a first impeller 74 coupled to the first rotor end 60. The first impeller 74 defines an inlet opening 76 aligned with the first cooling duct 70, and an outlet opening 78 aligned with the second cooling duct 72. The rotor assembly 50 further includes a second impeller 80 that is coupled to the second rotor end 62 such that the rotor 58 is disposed between the first impeller 74 and the second impeller 80 with respect to the rotor axis RA. The second impeller 80 defines an inlet opening 82 aligned with the second cooling duct 72 and the outlet opening 78 of the first impeller 74, and an outlet opening 84 aligned with the first cooling duct 70 and the inlet opening 76 of the first impeller 74.

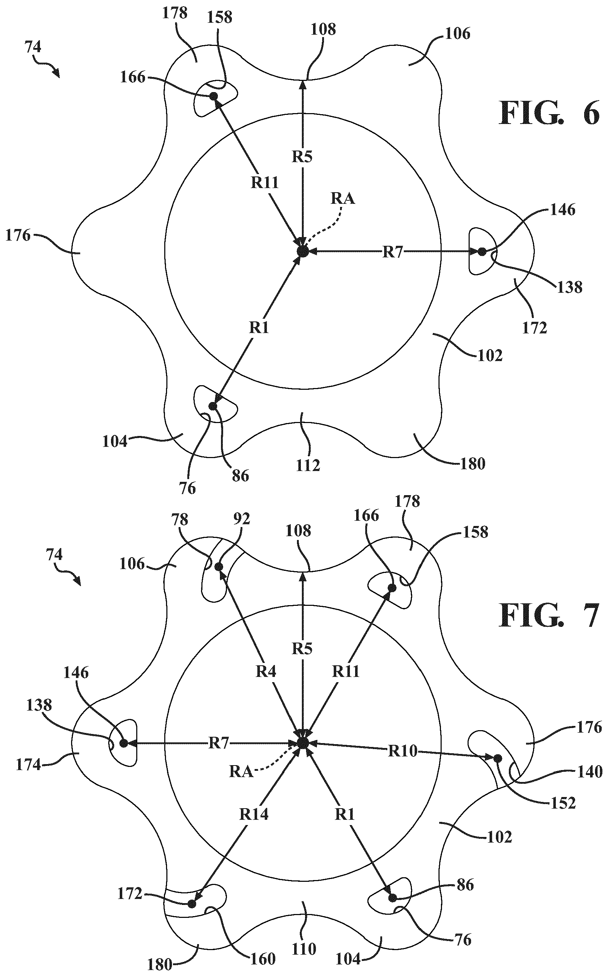

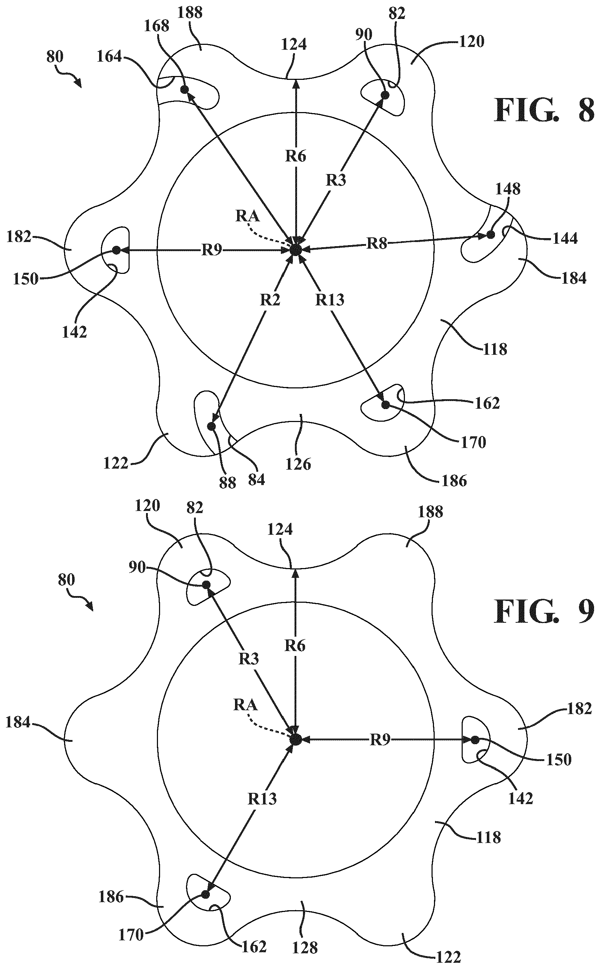

With particular reference to FIGS. 6-9, the inlet opening 76 of the first impeller 74 has an inlet geometric center 86, which defines a first inlet radius R1 between the inlet geometric center 86 of the inlet opening 76 of the first impeller 74 and the rotor axis RA. Similarly, the outlet opening 84 of the second impeller 80 has an outlet geometric center 88, which defines a first outlet radius R2 between the outlet geometric center 88 of the outlet opening 84 of the second impeller 80 and the rotor axis RA. The inlet opening 82 of the second impeller 80 has an inlet geometric center 90, with the inlet geometric center 90 of the inlet opening 82 of the second impeller 80 defining a first inlet radius R3 between the inlet geometric center 90 of the inlet opening 82 of the second impeller 80 and the rotor axis RA. The outlet opening 78 of the first impeller 74 has an outlet geometric center 92, with the outlet geometric center 92 of the outlet opening 78 of the first impeller 74 defining a first outlet radius R4 between the outlet geometric center 92 of the outlet opening 78 of the first impeller 74 and the rotor axis RA.

The first outlet radius R2 defined between the outlet geometric center 88 of the outlet opening 84 of the second impeller 80 and the rotor axis RA is greater than the first inlet radius R1 defined between the inlet geometric center 86 of the inlet opening 76 of the first impeller 74 and the rotor axis RA such that the first and second impellers 74, 80 are adapted to direct air flow in a first direction through the first cooling duct 70 from the first rotor end 60 to the second rotor end 62 when the rotor 58, the first impeller 74, and the second impeller 80 rotate about the rotor axis RA. Similarly, the first outlet radius R4 defined between the outlet geometric center 92 of the outlet opening 78 of the first impeller 74 and the rotor axis RA is greater than the first inlet radius R3 defined between the inlet geometric center 90 of the inlet opening 82 of the second impeller 80 and the rotor axis RA such that the first and second impellers 74, 80 are adapted to direct airflow in a second direction opposite the first direction through the second cooling duct 72 from the second rotor end 62 to the first rotor end 60 when the rotor 58, the first impeller 74, and the second impeller 80 rotate about the rotor axis RA.

Having (1) the first impeller 74 defining the inlet opening 76 aligned with the first cooling duct 70, and defining the outlet opening 78 aligned with the second cooling duct 72, (2) the he second impeller 80 defining the inlet opening 82 aligned with the second cooling duct 72 and the outlet opening 78 of the first impeller 74, and defining the outlet opening 84 aligned with the first cooling duct 70 and the inlet opening 76 of the first impeller 74, and (3) the first outlet radius R2 defined between the outlet geometric center 88 of the outlet opening 84 of the second impeller 80 and the rotor axis RA being greater than the first inlet radius R1 defined between the inlet geometric center 86 of the inlet opening 76 of the first impeller 74 and the rotor axis RA, and the first outlet radius R4 defined between the outlet geometric center 92 of the outlet opening 78 of the first impeller 74 and the rotor axis RA being greater than the first inlet radius R3 defined between the inlet geometric center 90 of the inlet opening 82 of the second impeller 80 and the rotor axis RA offers several advantages. First, as described above, this allows air flow through the first and second cooling ducts 70, 72 to flow in opposite directions from one another, which further cools the rotor 58 during operation of the electric machine 52. Second, inlet opening 76 defined by the first impeller 74 and the outlet opening 84 defined by the second impeller 80 act as a nozzle by drawing and forcing air from the inlet opening 76 to the outlet opening 84, and the inlet opening 82 defined by the second impeller 80 and outlet opening 78 defined by the first impeller 74 act as a nozzle by drawing and forcing air from the inlet opening 82 to the outlet opening 78. To further act as a nozzle, the cross-sectional area of the inlet opening 76 with respect to the rotor axis RA defined by the first impeller 74 may be greater than the cross-sectional area of the outlet opening 84 defined by the second impeller 80. Third, the first and second impellers 74, 80 may also be configured as balancing discs such that material may be subtracted or added from the first and/or second impellers 74, 80 for balancing the rotor 58 with respect to the shaft 64 when the shaft 64 rotates about the rotor axis RA during operation of the electric machine 52.

Typically, the first impeller 74, the second impeller 80, and the rotor 58 are adapted to rotate in unison about the rotor axis RA during operation of the electric machine 52. The first rotor end 60 has a first rotor face 94 and the second rotor end 62 has a second rotor face 96 facing opposite the first rotor face 94 with respect to the rotor axis RA. The first impeller 74 may be engaged with the first rotor face 94 and the second impeller 80 may be engaged with the second rotor face 96. In one embodiment, the first impeller 74 is directly engaged with the first rotor face 94 and the second impeller 80 is directly engaged with the second rotor face 96.

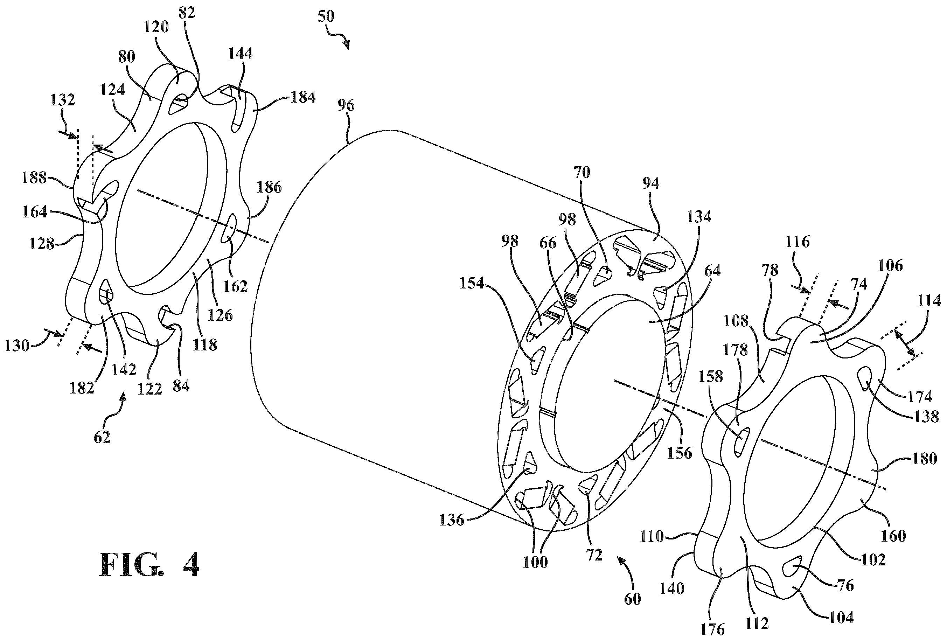

As shown in FIG. 4, the rotor assembly 50 may include a plurality of magnets 98 disposed in the rotor 58. The rotor 58 can define a plurality of magnet channels 100 adjacent the magnets 98, and the plurality of magnet channels 100 can be filled with an injection molded material. Alternatively, the plurality of magnet channels 100 can be hollow. Although not shown in the FIGS., it is to be appreciated that the first impeller 74 may define a magnet opening configured to align with at least one of the magnet channels 100 of the plurality of magnet channels 100, and the second impeller 80 may define a magnet opening configured to align with at least one of the magnet channels 100 of the plurality of magnet channels 100, particularly when the plurality of magnet channels 100 are hollow. Having the plurality of magnet channels 100 being hollow provides additional cooling for the rotor 58.

With reference to FIGS. 6-9, the first impeller 74 may have a first hub portion 102 and a first impeller arm 104 extending from the first hub portion 102 and away from the rotor axis RA. When present, the first impeller arm 104 may define the inlet opening 76 of the first impeller 74. The first impeller 74 may also have a second impeller arm 106 extending from the first hub portion 102 away from the rotor axis RA and defining the outlet opening 78 of the first impeller 74.

The first hub portion 102 may have an outer first hub surface 108 disposed between the first and second impeller arms 104, 106 of the first impeller 74. The outer first hub surface 108 defines an outer first hub radius R5 between the outer first hub surface 108 and the rotor axis RA. The first and second impeller arms 104, 106 of the first impeller 74 protrude away from the outer first hub surface 108 with respect to the rotor axis RA.

The outlet opening 78 of the first impeller 74 may be disposed outside of the outer first hub radius R5 with respect to the rotor axis RA. The inlet opening 76 of the first impeller 74 may also be disposed outside of the outer first hub radius R5 with respect to the rotor axis RA.

The outlet opening 78 of the first impeller 74 may have a curved or angled configuration with respect to the rotor axis. In such embodiments, the outlet opening 78 of the first impeller 74 may be curved or angled in a clockwise or counterclockwise configuration with respect to the rotor axis RA. Alternatively, the outlet opening 78 of the first impeller 74 may have a straight configuration with respect to the rotor axis RA.

The first impeller 74 may have a first impeller surface 110 facing the rotor 58, and the outlet opening 78 of the first impeller 74 may be defined by the first impeller surface 110 of the first impeller 74. The outlet opening 78 of the first impeller 74 may be partially defined through the first impeller 74. The first impeller 74 also has a second impeller surface 112 opposite the first impeller surface 110 of the first impeller 74 with respect to the rotor axis RA. The first impeller 74 has a first impeller thickness 114 defined between the first and second impeller surfaces 110, 112 of the first impeller 74, and the outlet opening 78 of the first impeller 74 has an outlet depth 116 with respect to the rotor axis RA that is less than the first impeller thickness 114.

The inlet opening 76 of the first impeller 74 may have a symmetrical configuration with respect to the rotor axis RA. For example, the inlet opening 76 of the first impeller 74 may have a semi-circle configuration. The first impeller arm 104 of the first impeller 74 and the second impeller arm 106 of the first impeller 74 may be radially spaced 180 degrees from one another with respect to the rotor axis.

Similar to the first impeller 74, the second impeller 80 may have a second hub portion 118 and may include a first impeller arm 120 extending from the second hub portion 118 and away from the rotor axis RA, defining the inlet opening 82 of the second impeller 80, and a second impeller arm 122 extending from the second hub portion 118 away from the rotor axis RA, defining the outlet opening 84 of the second impeller 80. The second hub portion 118 has an outer second hub surface 124 disposed between the first and second impeller arms 120, 122 of the second impeller 80. The outer second hub surface 124 defines an outer second hub radius R6 between the outer second hub surface 124 and the rotor axis RA, and the first and second impeller arms 120, 122 of the second impeller 80 protrude away from the outer second hub surface 124 with respect to the rotor axis RA.

The outlet opening 84 of the second impeller 80 is disposed outside of the outer second hub radius R6 with respect to the rotor axis RA. The inlet opening 82 of the second impeller 80 may also disposed outside of the outer second hub radius R6 with respect to the rotor axis RA. The outlet opening 84 of the second impeller 80 may have a curved or angled configuration with respect to the rotor axis RA and may be curved or angled in a clockwise or counterclockwise configuration with respect to the rotor axis RA. Alternatively, the outlet opening 84 of the second impeller 80 may have a straight configuration with respect to the rotor axis RA.

The second impeller 80 has a first impeller surface 126 facing the rotor 58, and the outlet opening 84 of the second impeller 80 may be defined by the second impeller surface 128 of the second impeller 80. The outlet opening 84 of the second impeller 80 may be partially defined through the second impeller 80. The second impeller 80 also has a second impeller surface 128 opposite the first impeller surface 126 of the second impeller 80 with respect to the rotor axis RA. The second impeller 80 has a second impeller thickness 130 defined between the first and second impeller surfaces 126, 128 of the second impeller 80, and the outlet opening 84 of the second impeller 80 has an outlet depth 132 with respect to the rotor axis RA that may be less than the second impeller thickness 130.

In one embodiment, the rotor 58 may define a third cooling duct 134 extending from the first rotor end 60 to the second rotor end 62, and a fourth cooling duct 136 extending from the first rotor end 60 to the second rotor end 62. The first impeller 74 may define a second inlet opening 138 aligned with the third cooling duct 134, and a second outlet opening 140 aligned with the fourth cooling duct 136. The second impeller 80 may define a second inlet opening 142 aligned with the fourth cooling duct 136 and the second outlet opening 144 of the first impeller 74, and a second outlet opening 144 aligned with the third cooling duct 134 and the second inlet opening 138 of the first impeller 74.

The second inlet opening 138 of the first impeller 74 has an inlet geometric center 146, which defines a second inlet radius R7 between the inlet geometric center 146 of the second inlet opening 138 of the first impeller 74 and the rotor axis RA. Similarly, the second outlet opening 144 of the second impeller 80 has an outlet geometric center 148, which defines a second outlet radius R8 between the outlet geometric center 148 of the second outlet opening 144 of the second impeller 80 and the rotor axis RA. The second inlet opening 142 of the second impeller 80 has an inlet geometric center 150. The inlet geometric center 150 of the second inlet opening 142 of the second impeller 80 and the rotor axis RA define a second inlet radius R9 therebetween. The second outlet opening 140 of the first impeller 74 also defines an outlet geometric center 152, with the outlet geometric center 152 of the second outlet opening of the first impeller 74 defining a second outlet radius R10 between the outlet geometric center 152 of the second outlet opening 140 of the first impeller 74 and the rotor axis RA.

The second outlet radius R8 defined between the outlet geometric center 148 of the second outlet opening 144 of the second impeller 80 may be greater than the second inlet radius R7 defined between the inlet geometric center 146 of the second inlet opening 138 of the first impeller 74 such that the first and second impellers 74, 80 are adapted to direct air flow in the first direction through the third cooling duct 134 from the first rotor end 60 to the second rotor end 62 when the rotor 58, the first impeller 74, and the second impeller 80 rotate about the rotor axis RA. Similarly, the second outlet radius R10 defined between the outlet geometric center 152 of the second outlet opening 140 of the first impeller 74 may be greater than the second inlet radius R9 defined between the inlet geometric center 150 of the second inlet opening 142 of the second impeller 80 such that the first and second impellers 74, 80 are adapted to direct airflow in the second direction opposite the first direction through the fourth cooling duct 136 from the second rotor end 62 to the first rotor end 60 when the rotor 58, the first impeller 74, and the second impeller 80 rotate about the rotor axis RA.

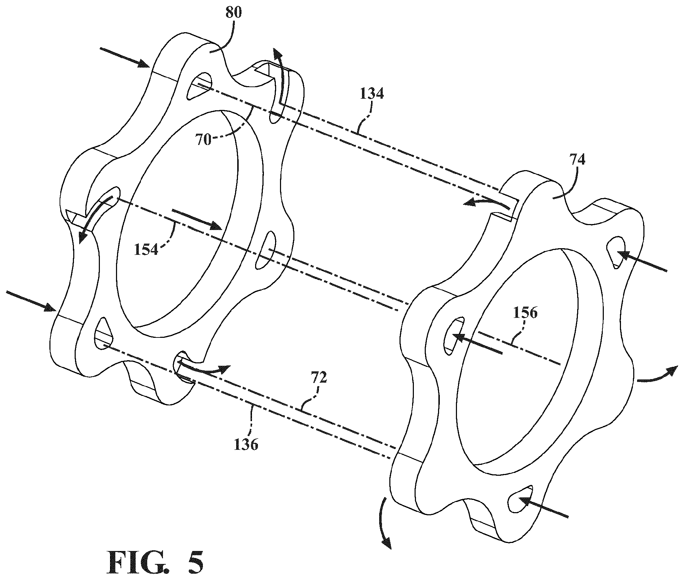

As shown in FIGS. 4 and 5, the rotor 58 may also define a fifth cooling duct 154 extending from the first rotor end 60 to the second rotor end 62, and a sixth cooling duct 156 extending from the first rotor end 60 to the second rotor end 62. The first impeller 74 may define a third inlet opening 158 aligned with the fifth cooling duct 154, and a third outlet opening 160 aligned with the sixth cooling duct 156. The second impeller 80 may define a third inlet opening 162 aligned with the sixth cooling duct 156 and the third outlet opening 160 of the first impeller 74, and a third outlet opening 164 aligned with the fifth cooling duct 154 and the third inlet opening 158 of the first impeller 74.

With reference again to FIGS. 6-9, the third inlet opening 158 of the first impeller 74 has an inlet geometric center 166, which defines a third inlet radius R11 between the inlet geometric center 166 of the third inlet opening 158 of the first impeller 74 and the rotor axis RA. Similarly, the third outlet opening 164 of the second impeller 80 has an outlet geometric center 168, which defines a third outlet radius R12 between the outlet geometric center 168 of the third outlet opening 164 of the second impeller 80 and the rotor axis RA. The third inlet opening 162 of the second impeller 80 has an inlet geometric center 170, with the inlet geometric center 170 of the third inlet opening 162 of the second impeller 80 defining a third inlet radius R13 between the inlet geometric center 170 of the third inlet opening 162 of the second impeller 80 and the rotor axis RA. The third outlet opening 160 of the first impeller 74 has an outlet geometric center 172, with the outlet geometric center 172 of the third outlet opening 160 of the first impeller 74 defining a third outlet radius R14 between the outlet geometric center 172 of the third outlet opening 160 of the first impeller 74 and the rotor axis RA.

The third outlet radius R12 defined between the outlet geometric center 168 of the third outlet opening 164 of the second impeller 80 may be greater than the third inlet radius R11 defined between the inlet geometric center 166 of the third inlet opening 158 of the first impeller 74 such that the first and second impellers 74, 80 are adapted to direct air flow in the first direction through the fifth cooling duct 154 from the first rotor end 60 to the second rotor end 62 when the rotor 58, the first impeller 74, and the second impeller 80 rotate about the rotor axis RA. Similarly, the third outlet radius R14 defined between the outlet geometric center 172 of the third outlet opening 160 of the first impeller 74 is greater than the third inlet radius R13 defined between the inlet geometric center 170 of the third inlet opening 162 of the second impeller 80 such that the first and second impellers 74, 80 are adapted to direct airflow in the second direction opposite the first direction through the sixth cooling duct 156 from the second rotor end 62 to the first rotor end 60 when the rotor 58, the first impeller 74, and the second impeller 80 rotate about the rotor axis.

In one embodiment, the first inlet opening 76 of the first impeller 74, the first outlet opening 78 of the first impeller 74, the second inlet opening 138 of the first impeller 74, the second outlet opening of the first impeller 74, the third inlet opening 158 of the first impeller 74, and the third outlet opening 160 of the first impeller 74 are equally radially spaced from one another with respect to and about the rotor axis RA. Similarly, the first inlet opening 82 of the second impeller 80, the first outlet opening 84 of the second impeller 80, the second inlet opening 142 of the second impeller 80, the second outlet opening 144 of the second impeller 80, the third inlet opening 162 of the second impeller 80, and the third outlet opening 164 of the second impeller 80 can be equally radially spaced from one another with respect to and about the rotor axis RA.

The first impeller 74 may include a third impeller arm 174 extending from the first hub portion 102 and away from the rotor axis RA with the third impeller arm 174 of the first impeller 74 defining the second inlet opening 138 of the first impeller 74. The first impeller 74 may include a fourth impeller arm 176 extending from the first hub portion 102 away from the rotor axis RA with the fourth impeller arm 176 of the first impeller 74 defining the second outlet opening 140 of the first impeller 74. The first impeller 74 may include a fifth impeller arm 178 extending from the first hub portion 102 away from the rotor axis RA with the fifth impeller arm 178 of the first impeller 74 defining the third inlet opening 158 of the first impeller 74. The first impeller 74 may include a sixth impeller arm 180 extending from the first hub portion 102 away from the rotor axis RA with the sixth impeller arm 180 defining the third outlet opening 160 of the first impeller 74. Similarly, the second impeller 80 may include a third impeller arm 182 extending from the second hub portion 118 and away from the rotor axis RA with the third impeller arm 182 of the second impeller 80 defining the second inlet opening 142 of the second impeller 80. The second impeller 80 may include a fourth impeller arm 184 extending from the second hub portion 118 away from the rotor axis RA with the fourth impeller arm 184 of the second impeller 80 defining the second outlet opening 144 of the second impeller 80. The second impeller 80 may include a fifth impeller arm 186 extending from the second hub portion 118 away from the rotor axis RA with the fifth impeller arm 186 of the second impeller 80 defining the third inlet opening 162 of the second impeller 80. The second impeller 80 may include a sixth impeller arm 188 extending from the second hub portion 118 away from the rotor axis RA with the sixth impeller arm 188 defining the third outlet opening 164 of the second impeller 80.

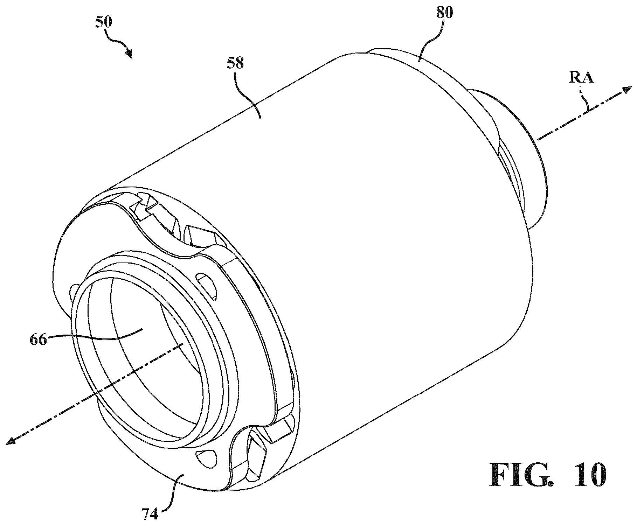

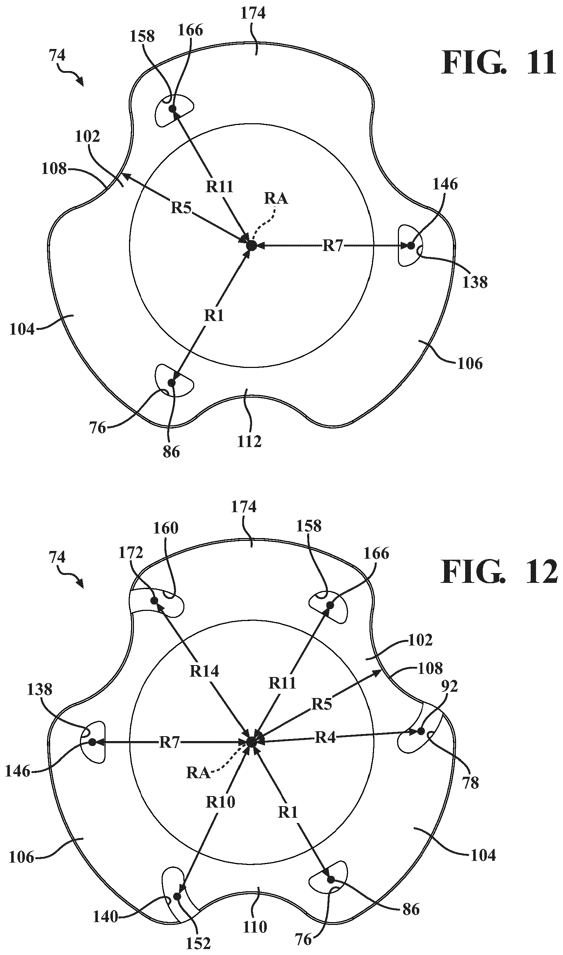

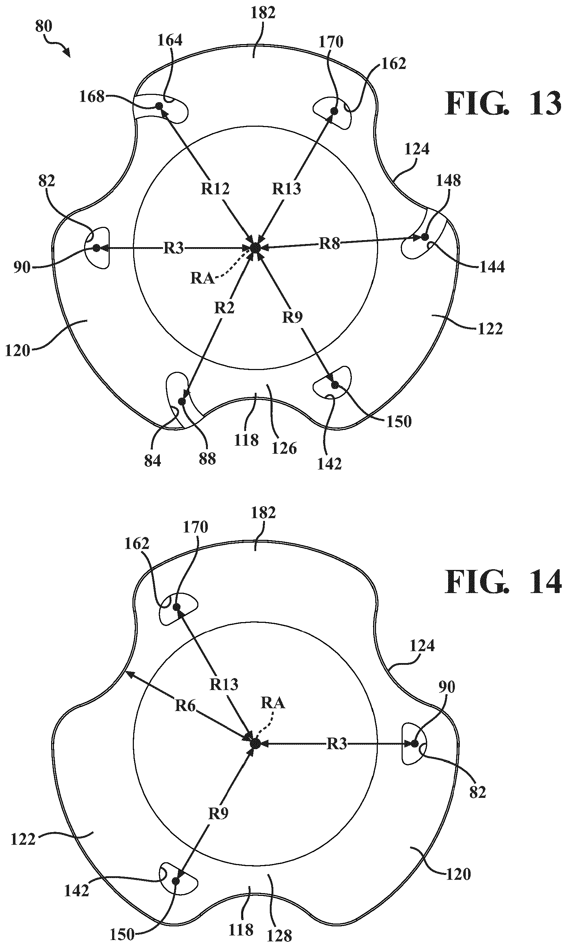

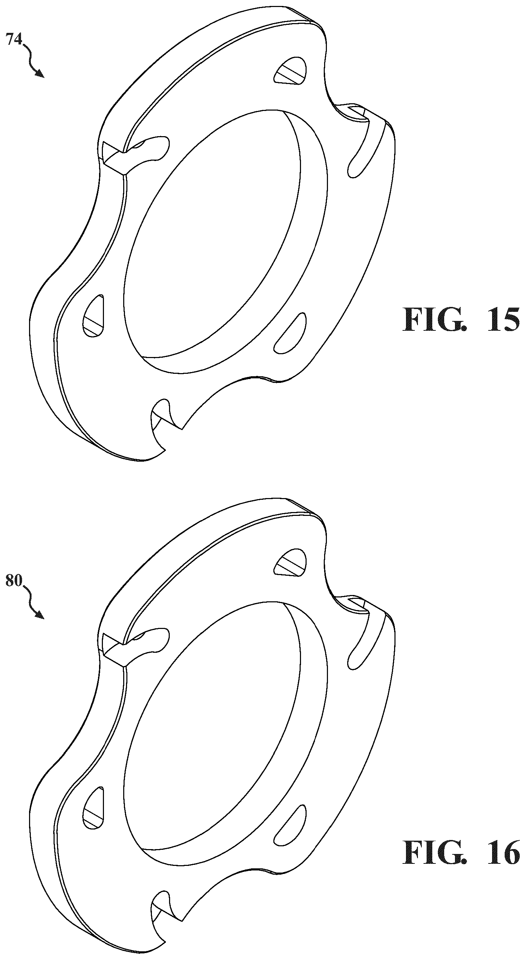

In another embodiment, as shown in FIGS. 10-16, the first impeller 74 may have the first hub portion 102 and may include the first impeller arm 104 extending from the first hub portion 102 and away from the rotor axis RA with the first impeller arm 104 defining both the inlet opening 76 of the first impeller 74 and the outlet opening 78 of the first impeller 74. Similarly, the second impeller 80 may have the second hub portion and may include the first impeller arm 120 of the second impeller 80 extending from the second hub portion 118 and away from the rotor axis RA with the first impeller arm 120 of the second impeller 80 defining both the outlet opening 84 of the second impeller 80 and the inlet opening 82 of the second impeller 80.

As described above, the rotor 58 may define the third cooling duct 134 and the fourth cooling duct 136 with the first impeller 74 defining the second inlet opening 138 aligned with the third cooling duct 134 and the second outlet opening 140 aligned with the fourth cooling duct 136. The second impeller 80 may define the second inlet opening 142 aligned with the fourth cooling duct 136 and the second outlet opening 140 of the first impeller 74, and the second impeller 80 may define the second outlet opening 144 aligned with the third cooling duct 134 and the second inlet opening 138 of the first impeller 74.

In the embodiment shown in FIGS. 10-16, the second inlet opening 138 of the first impeller 74 has the inlet geometric center 146, which defines the second inlet radius R7 between the inlet geometric center 146 of the second inlet opening 138 of the first impeller 74 and the rotor axis RA. Similarly, the second outlet opening 144 of the second impeller 80 has the outlet geometric center 148, which defines the second outlet radius R8 between the outlet geometric center 148 of the second outlet opening 144 of the second impeller 80 and the rotor axis RA. The second inlet opening 142 of the second impeller 80 has the inlet geometric center 150, with the inlet geometric center 150 of the second inlet opening 142 of the second impeller 80 defining the second inlet radius R9 between the inlet geometric center 150 of the second inlet opening 142 of the second impeller 80 and the rotor axis RA. The second outlet opening 140 of the first impeller 74 has the outlet geometric center 152, and the outlet geometric center 152 of the second outlet opening 140 of the first impeller 74 defines a second outlet radius R10 between the outlet geometric center 152 of the second outlet opening 140 of the first impeller 74 and the rotor axis RA.

The second outlet radius R8 defined between the outlet geometric center 148 of the second outlet opening 144 of the second impeller 80 may be greater than the second inlet radius R7 defined between the inlet geometric center 146 of the second inlet opening 138 of the first impeller 74 such that the first and second impellers 74, 80 are adapted to direct air flow in the first direction through the third cooling duct 134 from the first rotor end 60 to the second rotor end 62 when the rotor 58, the first impeller 74, and the second impeller 80 rotate about the rotor axis RA. Similarly, the second outlet radius R10 defined between the outlet geometric center 152 of the second outlet opening 140 of the first impeller 74 may be greater than the second inlet radius R9 defined between the inlet geometric center 150 of the second inlet opening 142 of the second impeller 80 such that the first and second impellers 74, 80 are adapted to direct airflow in the second direction opposite the first direction through the fourth cooling duct 136 from the second rotor end 62 to the first rotor end 60 when the rotor 58, the first impeller 74, and the second impeller 80 rotate about the rotor axis RA

The first impeller 74 may include the second impeller arm 106 extending from the first hub portion 102 and away from the rotor axis RA, with the second impeller arm 106 defining the second inlet opening 138 of the first impeller 74 and the second outlet opening 140 of the first impeller 74. Similarly, the second impeller 80 may include the second impeller arm 122 extending from the second hub portion 118 and away from the rotor axis RA, with the second impeller arm 122 defining the second inlet opening 142 of the second impeller 80 and the second outlet opening 144 of the second impeller 80.

The rotor 58 shown in FIG. 10, which may be the same as the rotor 58 shown in FIGS. 2-4, may also define the fifth cooling duct 154 extending from the first rotor end 60 to the second rotor end 62, and the sixth cooling duct 156 extending from the first rotor end 60 to the second rotor end 62. With reference again to FIGS. 10-16, the first impeller 74 may define the third inlet opening 158 aligned with the fifth cooling duct 154, and the third outlet opening 160 aligned with the sixth cooling duct 156. The second impeller 80 may define the third inlet opening 162 aligned with the sixth cooling duct 156 and the third outlet opening 160 of the first impeller 74, and the third outlet opening 164 aligned with the fifth cooling duct 154 and the third inlet opening 158 of the first impeller 74.

The third inlet opening 158 of the first impeller 74 has an inlet geometric center 166, which defines the third inlet radius R11 between the inlet geometric center 166 of the third inlet opening 158 of the first impeller 74 and the rotor axis RA. Similarly, the third outlet opening 164 of the second impeller 80 has an outlet geometric center 168, which defines the third outlet radius R12 between the outlet geometric center 168 of the third outlet opening 164 of the second impeller 80 and the rotor axis RA. The third inlet opening 162 of the second impeller 80 has an inlet geometric center 170, which defines the third inlet radius R13 between the inlet geometric center 170 of the third inlet opening 162 of the second impeller 80 and the rotor axis RA. The third outlet opening 160 of the first impeller 74 has an outlet geometric center 172, which defines the third outlet radius R14 between the outlet geometric center 172 of the third outlet opening 160 of the first impeller 74 and the rotor axis RA.

Typically, the third outlet radius R12 defined between the outlet geometric center 168 of the third outlet opening 164 of the second impeller 80 is greater than the third inlet radius R11 defined between the inlet geometric center 166 of the third inlet opening 158 of the first impeller 74 such that the first and second impellers 74, 80 are adapted to direct air flow in the first direction through the fifth cooling duct 154 from the first rotor end 60 to the second rotor end 62 when the rotor 58, the first impeller 74, and the second impeller 80 rotate about the rotor axis RA. Similarly, the third outlet radius R14 defined between the outlet geometric center 172 of the third outlet opening 160 of the first impeller 74 is greater than the third inlet radius R13 defined between the inlet geometric center 170 of the third inlet opening 162 of the second impeller 80 such that the first and second impellers 74, 80 are adapted to direct airflow in the second direction opposite the first direction through the sixth cooling duct 156 from the second rotor end 62 to the first rotor end 60 when the rotor 58, the first impeller 74, and the second impeller 80 rotate about the rotor axis RA.

With continued reference to FIGS. 10-16, the first impeller 74 may include the third impeller arm 174 extending from the first hub portion 102 and away from the rotor axis RA, with the third impeller arm 174 defining the third inlet opening 158 of the first impeller 74 and the third outlet opening 160 of the first impeller 74. Similarly, the second impeller 80 may include the third impeller arm 182 extending from the second hub portion 118 and away from the rotor axis RA, with the third impeller arm 182 of the second impeller 80 defining the third inlet opening 162 of the second impeller 80 and the third outlet opening 164 of the second impeller 80.

It is to be appreciated that the first impeller 74 and second impeller 80 shown throughout the FIGS. may be mirrored components of one another with respect to the rotor axis RA. It is also to be appreciated that the first impeller 74 and the second impeller 80 may be replicas of one another with respect to the rotor axis RA.

As described above, the cross-sectional area of the inlet opening 76 with respect to the rotor axis RA defined by the first impeller 74 may be greater than the cross-sectional area of the outlet opening 84 defined by the second impeller 80. Similarly, when the first and second impellers 74, 80 define more than one inlet opening and outlet opening, the cross-sectional area of the inlet openings with respect to the rotor axis A defined by one of the first and second impellers 74, 80 may be less than the cross-sectional area of the outlet openings with respect to rotor axis A defined by the other of the first and second impellers 74, 80.

It is to be appreciated that the first and second impellers 74, 80 may have zero impeller arms, one impeller arm, two impeller arms, three impeller arms, four impeller arms, five impeller arms, six impeller arms, seven impeller arms, or eight or more impeller arms. Similarly, it is to be appreciated that each of the first and second impeller arms 74, 80 may have two cooling ducts, three cooling ducts, four cooling ducts, five cooling ducts, six cooling ducts, seven cooling ducts, or eight or more cooling ducts.

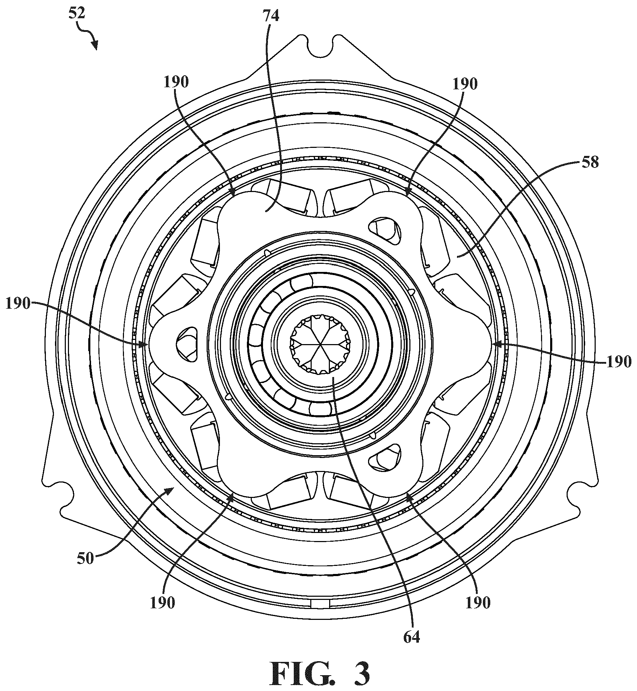

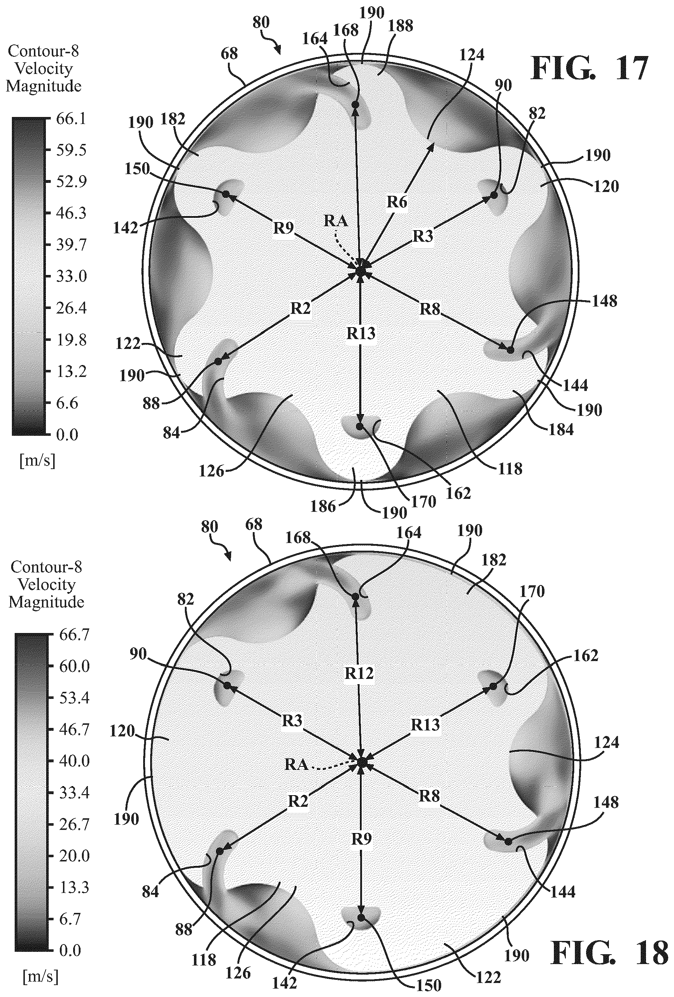

As shown in FIGS. 3, 17, and 18 and, the first impeller arm 104 of the first impeller 74 may define a vortex channel 190 between the first impeller arm 104 and the stator 68. It is to be appreciated that each of the impeller arms, for example the first impeller arm 104, the second impeller arm 106, and the third impeller arm 174 of the first impeller 74 may each define a vortex channel 190 between each respective impeller arm and the stator or another component of the electric machine 52. In embodiments where the first impeller 74 has the fourth impeller arm 176, the fifth impeller arm 178, and the sixth impeller arm 180, each of the impeller arms may define a vortex channel 190 between each respective impeller arm and the stator 68 or another component of the electric machine 52. When present, the vortex channel 190 may increase the flow rate of fluid through the first and second cooling ducts 70, 72 and, when present, the third, fourth, fifth, and/or sixth cooling ducts 134, 136, 154, and 156. Additionally, when present, the vortex channel 190 decreases air resistance against the first and second impellers 74, 76 to allow the first and second impellers 74, 76 and, therefore, the rotor 58 and shaft 64, to rotate at higher desired speeds. The thickness of the vortex channel 190 may be adjusted based on the intended mass flow rate through the first and second cooling ducts 70, 72 and, when present, the third, fourth, fifth, and/or sixth cooling ducts 134, 136, 154, and 156. For example, if higher mass flow rates are desired through the first and second cooling ducts 70, 72, the vortex channel 190 may be wider than when a lower mass flow rate is desired through the first and second cooling ducts 70, 72 and, when present, the third, fourth, fifth, and/or sixth cooling ducts 134, 136, 154, and 156.

It is also to be appreciated that a system including the electric machine 52 may also include a gear box heat exchanger. In such systems, the first impeller 74 and/or the second impeller 80 may be configured to direct airflow to the gear box heat exchanger for cooling the gearbox heat exchanger or any other component in the system.

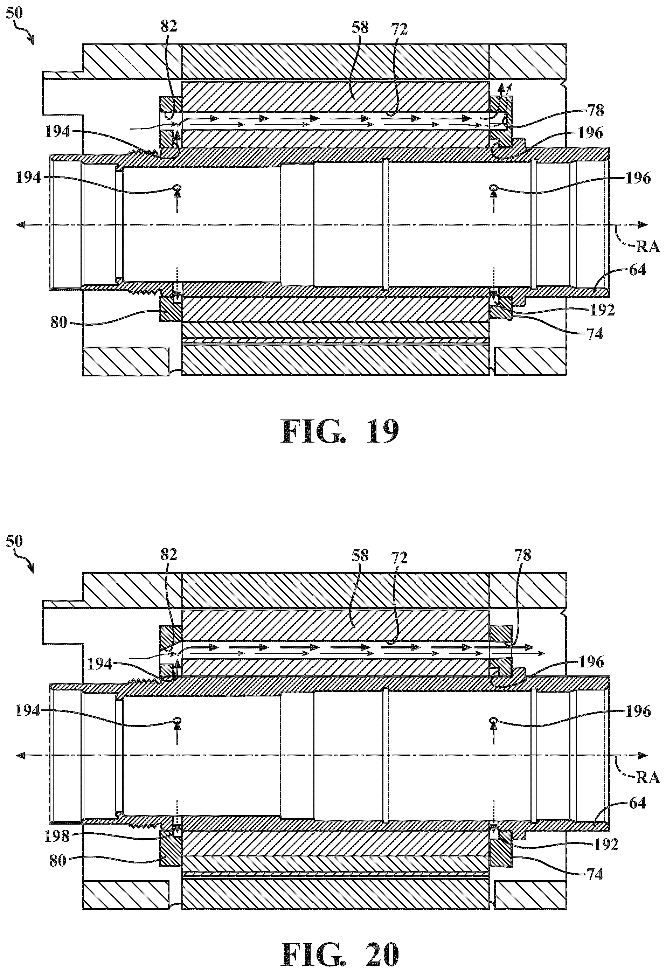

The rotor assembly 50 includes a first oil channel 192 and a second oil channel, as shown in FIGS. 19 and 20. The first oil channel 192 is configured to direct oil to the first cooling duct 70 adjacent the first impeller 74, and the second oil channel 194 is configured to direct oil to the second cooling 72 duct adjacent the second impeller 76. The first oil channel 192 is fluidly coupled with the first cooling duct 70 such that oil and air are mixed within the first cooling duct 70 during operation of the rotor assembly, and the second oil channel 194 is fluidly coupled with the second cooling duct 72 such that oil and air are mixed within the second cooling duct 72 during operation of the rotor assembly 50.

It is to be appreciated that the first and second oil cooling channels 192, 194 may be used in the rotor assembly 50 with any of the embodiments of the rotor assembly 50 described above, such as the different embodiments of the first and second impellers 74, 80. Having the first oil channel 192 being fluidly coupled with the first cooling duct 70 such that oil and air are mixed within the first cooling duct 70 during operation of the rotor assembly, and having the second oil channel 194 being fluidly coupled with the second cooling duct 72 such that oil and air are mixed within the second cooling duct 72 during operation of the rotor assembly 50 increased the cooling capabilities of the rotor assembly 50 as the oil and air mixture flowing through the first and second cooling ducts 70, 72 improves dissipation of heat when compared to only air passing through the first and second cooling ducts 70, 72. This is particularly important in certain electric machines, such as when the electric machine 52 has a rotational speed of the shaft 64 in excess of 23,000 rotations per minute.

With continued reference to FIGS. 4, the first rotor end 60 has the first rotor face 94 and the second rotor end 62 has the second rotor face 96 facing opposite the first rotor face 94 with respect to the rotor axis RA. With reference to FIGS. 19 and 20, the first oil channel 192 may be defined between the first rotor face 94 and the first impeller 74, the second oil channel 194 may be defined between the second rotor face 96 and the second impeller 80. The first oil channel 192 may be directly fluidly coupled with the inlet opening 76 of the first impeller 74 such that the inlet opening 76 of the first impeller 74 is configured to direct and mix oil with air into the first cooling duct 70, and the second oil channel 194 may be directly fluidly coupled with the inlet opening 82 of the second impeller 80 such that the inlet opening 82 of the second impeller 80 is configured to direct and mix oil with air into the second cooling duct 72.

Although not explicitly shown in the FIGS., the rotor assembly 50 may include a third oil channel configured to direct oil to the third cooling duct 134 adjacent the first impeller 74, and a fourth oil channel configured to direct oil to the fourth cooling duct 136 adjacent the second impeller 76. Similar to the first and second oil channels 192, 194, the third oil channel, when present, is fluidly coupled with the third cooling duct 134 such that oil and air are mixed within the third cooling duct 134 during operation of the rotor assembly 50, and the fourth oil channel, when present, is fluidly coupled with the fourth cooling duct 136 such that oil and air are mixed within the fourth cooling duct 136 during operation of the rotor assembly 50. Again, similar to the first and second oil channels 192, 194, the third oil channel may be directly fluidly coupled with the second inlet opening 138 of the first impeller 74 such that the second inlet opening 138 of the first impeller 74 is configured to direct and mix oil with air into the third cooling duct 134, and the fourth oil channel may be directly fluidly coupled with the second inlet opening 142 of the second impeller 80 such that the second inlet opening 142 of the second impeller 80 is configured to direct and mix oil with air into the fourth cooling duct 136. It is to be appreciated that the rotor assembly 50 may have any number of oil cooling channels, such as a fifth and sixth oil cooling channel, that are configured to direct oil to cooling ducts, such as the fifth and sixth cooling ducts 154, 156 to allow the first and second impellers 74, 80 to mix oil and air in the fifth and sixth cooling ducts, 154, 156. Such additional oil channels may similarly be configured to each respective cooling duct as shown with respect to the second cooling duct 72 in FIGS. 19 and 20.

The shaft 64 may define at least a portion of the first and second oil channels 192, 194. In other embodiments, the first oil channel 192 may be defined by the shaft 64 to direct oil to the first cooling duct 70 adjacent the first impeller 74, and the second oil channel 194 may be defined by the shaft 64 to direct oil to the second cooling duct 72 adjacent the second impeller 80. Similarly, when present, the shaft 64 may define at least a portion of the third and fourth oil channels, and the shaft 64 may define at least a portion of the fifth and sixth oil channels.

## Claims

1. A rotor assembly (50) for use in an electric machine (52), said rotor assembly (50) comprising:
a rotor (58) extending along and adapted to be rotatable about a rotor axis (RA), wherein said rotor (58) has a first rotor end (60) and a second rotor end (62) spaced from said first rotor end (60) with respect to said rotor axis (RA), wherein said rotor (58) defines a first cooling duct (70) extending from said first rotor end (60) to said second rotor end (62), and wherein said rotor (58) defines a second cooling duct (72) extending from said first rotor end (60) to said second rotor end (62);
a first impeller (74) coupled to said first rotor end (60), wherein said first impeller (74) defines an inlet opening (76) aligned with said first cooling duct (70), and wherein said first impeller (74) defines an outlet opening (78) aligned with said second cooling duct (72); and
a second impeller (80) coupled to said second rotor end (62) such that said rotor (58) is disposed between said first impeller (74) and said second impeller (80) with respect to said rotor axis (RA), wherein said second impeller (80) defines an inlet opening (82) aligned with said second cooling duct (72) and said outlet opening (78) of said first impeller (74), and wherein said second impeller (80) defines an outlet opening (84) aligned with said first cooling duct (70) and said inlet opening (76) of said first impeller (74);
**characterized by** a first oil channel (192) configured to direct oil to said first cooling duct (70) adjacent said first impeller (74); and
a second oil channel (194) configured to direct oil to said second cooling duct (72) adjacent said second impeller (80);
wherein said first oil channel (192) is fluidly coupled with said first cooling duct (70) such that oil and air are mixed within said first cooling duct (70) during operation of the rotor assembly (50), and wherein said second oil channel (194) is fluidly coupled with said second cooling duct (72) such that oil and air are mixed within said second cooling duct (72) during operation of the rotor assembly (50).

2. The rotor assembly (50) as set forth in claim 1, wherein said first rotor end (60) has a first rotor face (94) and said second rotor end (62) has a second rotor face (96) facing opposite said first rotor face (94) with respect to said rotor axis (RA), wherein said first oil channel (192) is defined between said first rotor face (94) and said first impeller (74), and wherein said second oil channel (194) is defined between said second rotor face (96) and said second impeller (80).

3. The rotor assembly (50) as set forth in claim 2, wherein said first oil channel (192) is directly fluidly coupled with said inlet opening (76) of said first impeller (74) such that said inlet opening (76) of said first impeller (74) is configured to direct and mix oil with air into said first cooling duct (70), and wherein said second oil channel (194) is directly fluidly coupled with said inlet opening (82) of said second impeller (80) such that said inlet opening (82) of said second impeller (80) is configured to direct and mix oil with air into said second cooling duct (72).

4. The rotor assembly (50) as set forth in any one of the preceding claims, wherein said inlet opening (76) of said first impeller (74) has an inlet geometric center (86), and wherein said inlet geometric center (86) of said inlet opening (76) of said first impeller (74) defines a first inlet radius (R1) between said inlet geometric center (86) of said inlet opening (76) of said first impeller (74) and said rotor axis (RA),
wherein said outlet opening (84) of said second impeller (80) has an outlet geometric center (88), and wherein said outlet geometric center (88) of said outlet opening (84) of said second impeller (80) defines a first outlet radius (R2) between said outlet geometric center (88) of said outlet opening (84) of said second impeller (80) and said rotor axis (RA), wherein said inlet opening (82) of said second impeller (80) has an inlet geometric center (90), and wherein said inlet geometric center (90) of said inlet opening (82) of said second impeller (80) defines a first inlet radius (R3) between said inlet geometric center (90) of said inlet opening (82) of said second impeller (80) and said rotor axis (RA),
wherein said outlet opening (78) of said first impeller (74) has an outlet geometric center (92), and wherein said outlet geometric center (92)of said outlet opening (78) of said first impeller (74) defines a first outlet radius (R4) between said outlet geometric center (92) of said outlet opening (78) of said first impeller (74) and said rotor axis (RA), and
wherein said first outlet radius (R2) defined between said outlet geometric center (88) of said outlet opening (84) of said second impeller (80) and said rotor axis (RA) is greater than said first inlet radius (R1) defined between said inlet geometric center (86) of said inlet opening (76) of said first impeller (74) and said rotor axis (RA) such that said first and second impellers (74, 80) are adapted to direct fluid flow of the air and oil in a first direction through said first cooling duct (70) from said first rotor end (60) to said second rotor end (62) when said rotor (58), said first impeller (74), and said second impeller (80) rotate about said rotor axis (RA), and wherein said first outlet radius (R4) defined between said outlet geometric center (92) of said outlet opening (78) of said first impeller (74) and said rotor axis (RA) is greater than said first inlet radius (R3) defined between said inlet geometric center (90) of said inlet opening (82) of said second impeller (80) and said rotor axis (RA) such that said first and second impellers (74, 80) are adapted to direct fluid flow of the air and oil in a second direction opposite said first direction through said second cooling duct (72) from said second rotor end (62) to said first rotor end (60) when said rotor (58), said first impeller (74), and said second impeller (80) rotate about said rotor axis (RA).

5. The rotor assembly (50) as set forth in claim 4, wherein said first impeller (74) has a first hub portion (102), and wherein said first impeller (74) comprises a first impeller arm (104) extending from said first hub portion (102) and away from said rotor axis (RA) and defining said inlet opening (76) of said first impeller (74), and a second impeller arm (106) extending from said first hub portion (102) away from said rotor axis (RA) and defining said outlet opening (74) of said first impeller (74).

6. The rotor assembly (50) as set forth in claim 5, wherein said first hub portion (102) has an outer first hub surface (108) disposed between said first and second impeller arms (104, 106) of said first impeller (74), wherein said outer first hub surface (108) defines an outer first hub radius (R5) between said outer first hub surface (108) and said rotor axis (RA), and wherein said first and second impeller arms (104, 106) of said first impeller (74) protrude away from said outer first hub surface (108) with respect to said rotor axis (RA), optionally
wherein said outlet opening (78) of said first impeller (74) is disposed outside of said outer first hub radius (R5) with respect to said rotor axis (RA), and optionally
wherein said inlet opening (76) of said first impeller (74) is disposed outside of said outer first hub radius (R5) with respect to said rotor axis (RA).

7. The rotor assembly (50) as set forth in any one of the preceding claims, wherein said second impeller (80) has a second hub portion (118), and wherein said second impeller (80) comprises a first impeller arm (120) extending from said second hub portion (118) and away from said rotor axis (RA) and defining said inlet opening (82) of said second impeller (80), and a second impeller arm (122) extending from said second hub portion (118) away from said rotor axis (RA) and defining said outlet opening (84) of said second impeller (80).

8. The rotor assembly (50) as set forth in any one of the preceding claims, wherein said first impeller (74) has a first impeller surface (110) facing said rotor, and wherein said outlet opening (78) of said first impeller (74) is defined by said first impeller surface (112) of said first impeller (74), optionally wherein said first impeller (74) has a second impeller surface (112) opposite said first impeller surface (110) of said first impeller (74) with respect to said rotor axis (RA), wherein said first impeller (74) has a first impeller thickness (114) defined between said first and second impeller surfaces (110, 112) of said first impeller (74), and wherein said outlet opening of said first impeller (74) has an outlet depth (116) with respect to said rotor axis (RA) that is less than said first impeller thickness (114).

9. The rotor assembly (50) as set forth in any one of the preceding claims, wherein said rotor (58) defines a third cooling duct (134) extending from said first rotor end (60) to said second rotor end (62), and a fourth cooling duct (136) extending from said first rotor end (60) to said second rotor end (62);
wherein said first impeller (74) defines a second inlet opening (138) aligned with said third cooling duct (134), and wherein said first impeller (74) defines a second outlet opening (140) aligned with said fourth cooling duct (136);
wherein said second impeller (80) defines second inlet opening (142) aligned with said fourth cooling duct (136) and said second outlet opening (140) of said first impeller (74), and wherein said second impeller (80) defines a second outlet opening (144) aligned with said third cooling duct (134) and said second inlet opening (138) of said first impeller (74); a third oil channel configured to direct oil to said third cooling duct (134) adjacent said first impeller (74); and
a fourth oil channel configured to direct oil to said fourth cooling duct (136) adjacent said second impeller (80);
wherein said third oil channel is fluidly coupled with said third cooling duct (134) such that oil and air are mixed within said third cooling duct (134) during operation of the rotor assembly (50), and wherein said fourth oil channel is fluidly coupled with said fourth cooling duct (136) such that oil and air are mixed within said fourth cooling duct (136) during operation of the rotor assembly (50).

10. The rotor assembly (50) as set forth in claim 9, wherein said third oil channel is directly fluidly coupled with said second inlet opening of said first impeller (74) such that said second inlet opening (138) of said first impeller (74) is configured to direct and mix oil with air into said third cooling duct (134), and wherein said fourth oil channel is directly fluidly coupled with said second inlet opening (142) of said second impeller (80) such that said second inlet opening (142) of said second impeller (80) is configured to direct and mix oil with air into said fourth cooling duct (136).

11. The rotor assembly (50) as set forth in any one of claims 9 and 10, wherein said second inlet opening (138) of said first impeller (74) has an inlet geometric center (146), and wherein said inlet geometric center (146) of said second inlet opening (138) of said first impeller (74) defines a second inlet radius (R7) between said inlet geometric center (146) of said second inlet opening (138) of said first impeller (74) and said rotor axis (RA);
wherein said second outlet opening (144) of said second impeller (80) has an outlet geometric center (148), and wherein said outlet geometric center (148) of said second outlet opening (144) of said second impeller (80) defines a second outlet radius (R8) between said outlet geometric center (148) of said second outlet opening (144) of said second impeller (80) and said rotor axis (RA);
wherein said second inlet opening (142) of said second impeller (80) has an inlet geometric center (150), and wherein said inlet geometric center (150) of said second inlet opening (142) of said second impeller (80) defines a second inlet radius (R9) between said inlet geometric center (150) of said second inlet opening (142) of said second impeller (80) and said rotor axis (RA); and
wherein second outlet opening (140) of said first impeller (74) has an outlet geometric center (152), and wherein said outlet geometric center (152) of said second outlet opening (140) of said first impeller (74) defines a second outlet radius (R10) between said outlet geometric center (152) of said second outlet opening (140) of said first impeller (74) and said rotor axis (RA).

12. The rotor assembly (50) as set forth in claim 11, wherein said second outlet radius (R8) defined between said outlet geometric center (148) of said second outlet opening (144) of said second impeller (80) is greater than said second inlet radius (R7) defined between said inlet geometric center (146) of said second inlet opening (138) of said first impeller (74) such that said first and second impellers (74, 80) are adapted to direct fluid flow of the air and oil in said first direction through said third cooling duct (134) from said first rotor end (60) to said second rotor end (62) when said rotor (58), said first impeller (74), and said second impeller (80) rotate about said rotor axis (RA), and wherein said second outlet radius (R10) defined between said outlet geometric center (152) of said second outlet opening (140) of said first impeller (74) is greater than said second inlet radius (R9) defined between said inlet geometric center (150) of said second inlet opening (142) of said second impeller (80) such that said first and second impellers (74, 80) are adapted to direct fluid flow of the air and oil in said second direction opposite said first direction through said fourth cooling duct (136) from said second rotor end (62) to said first rotor end (60) when said rotor (58), said first impeller (74), and said second impeller (80) rotate about said rotor axis (RA).

13. The rotor assembly (50) as set forth in any one of the preceding claims further comprising a plurality of magnets (98) disposed in said rotor (58), wherein said rotor (58) defines a plurality of magnet channels (100) adjacent said magnets (98), wherein said plurality of magnet channels (100) are hollow, and wherein said first impeller (74) defines a magnet opening configured to align with at least one of said magnet channels (100) of said plurality of magnet channels (100), and wherein said second impeller (80) defines a magnet opening configured to align with at least one of said magnet channels (100) of said plurality of magnet channels (100).

14. An electric machine (52) comprising said rotor assembly (50) as set forth in any one of the preceding claims and further comprising:
a shaft (64) extending along said rotor axis (RA), wherein said rotor (58) defines a rotor interior (66) and said shaft (64) is disposed in said rotor interior (66) and coupled to said rotor (58); and
a stator (68) coupled to and disposed about said rotor (58) with respect to said rotor (58);
wherein said shaft (64) defines at least a portion of said first oil channel (192) and said second oil channel (194).

15. The electric machine (52) as set forth in claim 14, wherein said first oil channel (192) is defined by said shaft (64) to direct oil to said first cooling duct (70) adjacent said first impeller (74), and said second oil channel (194) is defined by said shaft to direct oil to said second cooling duct (72) adjacent said second impeller (80).

16. The electric machine (52) as set forth in any one of claims 14 and 15, wherein said first impeller arm of said first impeller (74) defines a vortex channel between said first impeller arm and said stator.

## Patentansprüche

1. Rotorbaugruppe (50) für eine Verwendung in einer elektrischen Maschine (52), wobei die Rotorbaugruppe (50) umfasst:
einen Rotor (58), der sich entlang einer Rotorachse (RA) erstreckt und geeignet ist, um sich um diese zu drehen, wobei der Rotor (58) ein erstes Rotorende (60) und ein zweites Rotorende (62) aufweist, das von dem ersten Rotorende (60) in Bezug auf die Rotorachse (RA) beabstandet ist, wobei der Rotor (58) einen ersten Kühlkanal (70) definiert, der sich vom ersten Rotorende (60) zum zweiten Rotorende (62) erstreckt, und wobei der Rotor (58) einen zweiten Kühlkanal (72) definiert, der sich vom ersten Rotorende (60) zum zweiten Rotorende (62) erstreckt;
ein erstes Laufrad (74), das mit dem ersten Rotorende (60) gekoppelt ist, wobei das erste Laufrad (74) eine Einlassöffnung (76) definiert, die auf den ersten Kühlkanal (70) ausgerichtet ist, und wobei das erste Laufrad (74) eine Auslassöffnung (78) definiert, die auf den zweiten Kühlkanal (72) ausgerichtet ist; und
ein zweites Laufrad (80), das mit dem zweiten Rotorende (62) derart gekoppelt ist, dass der Rotor (58) in Bezug auf die Rotorachse (RA) zwischen dem ersten Laufrad (74) und dem zweiten Laufrad (80) angeordnet ist, wobei das zweite Laufrad (80) eine Einlassöffnung (82) definiert, die auf den zweiten Kühlkanal (72) und die Auslassöffnung (78) des ersten Laufrads (74) ausgerichtet ist, und wobei das zweite Laufrad (80) eine Auslassöffnung (84) definiert, die auf den ersten Kühlkanal (70) und die Einlassöffnung (76) des ersten Laufrads (74) ausgerichtet ist;
**gekennzeichnet durch** einen ersten Ölkanal (192), der konfiguriert ist, um Öl angrenzend an das erste Laufrad (74) zu dem ersten Kühlkanal (70) zu leiten; und einen zweiten Ölkanal (194), der konfiguriert ist, um Öl angrenzend an das zweite Laufrad (80) zu dem zweiten Kühlkanal (72) zu leiten;
wobei der erste Ölkanal (192) fluidisch mit dem ersten Kühlkanal (70) gekoppelt ist, sodass Öl und Luft während des Betriebs der Rotorbaugruppe (50) innerhalb des ersten Kühlkanals (70) gemischt werden, und wobei der zweite Ölkanal (194) fluidisch mit dem zweiten Kühlkanal (72) gekoppelt ist, sodass Öl und Luft während des Betriebs der Rotorbaugruppe (50) innerhalb des zweiten Kühlkanals (72) gemischt werden.

2. Rotorbaugruppe (50) nach Anspruch 1, wobei das erste Rotorende (60) eine erste Rotorfläche (94) aufweist und das zweite Rotorende (62) eine zweite Rotorfläche (96) aufweist, die der ersten Rotorfläche (94) in Bezug auf die Rotorachse (RA) gegenüberliegt, wobei der erste Ölkanal (192) zwischen der ersten Rotorfläche (94) und dem ersten Laufrad (74) definiert ist, und wobei der zweite Ölkanal (194) zwischen der zweiten Rotorfläche (96) und dem zweiten Laufrad (80) definiert ist.

3. Rotorbaugruppe (50) nach Anspruch 2, wobei der erste Ölkanal (192) direkt fluidisch mit der Einlassöffnung (76) des ersten Laufrads (74) gekoppelt ist, sodass die Einlassöffnung (76) des ersten Laufrads (74) konfiguriert ist, um Öl mit Luft in den ersten Kühlkanal (70) zu leiten und zu mischen, und wobei der zweite Ölkanal (194) direkt fluidisch mit der Einlassöffnung (82) des zweiten Laufrads (80) gekoppelt ist, sodass die Einlassöffnung (82) des zweiten Laufrads (80) konfiguriert ist, um Öl mit Luft in den zweiten Kühlkanal (72) zu leiten und zu mischen.

4. Rotorbaugruppe (50) nach einem der vorhergehenden Ansprüche, wobei die Einlassöffnung (76) des ersten Laufrads (74) ein geometrisches Einlasszentrum (86) aufweist und wobei das geometrische Einlasszentrum (86) der Einlassöffnung (76) des ersten Laufrads (74) einen ersten Einlassradius (R1) zwischen dem geometrischen Einlasszentrum (86) der Einlassöffnung (76) des ersten Laufrads (74) und der Rotorachse (RA) definiert,
wobei die Auslassöffnung (84) des zweiten Laufrads (80) ein geometrisches Auslasszentrum (88) aufweist und wobei das geometrische Auslasszentrum (88) der Auslassöffnung (84) des zweiten Laufrads (80) einen ersten Auslassradius (R2) zwischen dem geometrischen Auslasszentrum (88) der Auslassöffnung (84) des zweiten Laufrads (80) und der Rotorachse (RA) definiert,
wobei die Einlassöffnung (82) des zweiten Laufrads (80) ein geometrisches Einlasszentrum (90) aufweist und wobei das geometrische Einlasszentrum (90) der Einlassöffnung (82) des zweiten Laufrads (80) einen ersten Einlassradius (R3) zwischen dem geometrischen Einlasszentrum (90) der Einlassöffnung (82) des zweiten Laufrads (80) und der Rotorachse (RA) definiert,
wobei die Auslassöffnung (78) des ersten Laufrads (74) ein geometrisches Auslasszentrum (92) aufweist und wobei das geometrische Auslasszentrum (92) der Auslassöffnung (78) des ersten Laufrads (74) einen ersten Auslassradius (R4) zwischen dem geometrischen Auslasszentrum (92) der Auslassöffnung (78) des ersten Laufrads (74) und der Rotorachse (RA) definiert, und
wobei der erste Auslassradius (R2), der zwischen dem geometrischen Auslasszentrum (88) der Auslassöffnung (84) des zweiten Laufrads (80) und der Rotorachse (RA) definiert ist, größer ist als der erste Einlassradius (R1), der zwischen dem geometrischen Einlasszentrum (86) der Einlassöffnung (76) des ersten Laufrads (74) und der Rotorachse (RA) definiert ist, sodass das erste und das zweite Laufrad (74, 80) geeignet sind, um einen Fluidstrom der Luft und des Öls in einer ersten Richtung durch den ersten Kühlkanal (70) von dem ersten Rotorende (60) zu dem zweiten Rotorende (62) zu leiten, wenn sich der Rotor (58), das erste Laufrad (74) und das zweite Laufrad (80) um die Rotorachse (RA) drehen, und wobei der erste Auslassradius (R4), der zwischen dem geometrischen Auslasszentrum (92) der Auslassöffnung (78) des ersten Laufrads (74) und der Rotorachse (RA) definiert ist, größer ist als der erste Einlassradius (R3), der zwischen dem geometrischen Einlasszentrum (90) der Einlassöffnung (82) des zweiten Laufrads (80) und der Rotorachse (RA) definiert ist, sodass das erste und das zweite Laufrad (74, 80) geeignet sind, um einen Fluidstrom der Luft und des Öls in einer zweiten Richtung entgegengesetzt zu der ersten Richtung durch den zweiten Kühlkanal (72) von dem zweiten Rotorende (62) zu dem ersten Rotorende (60) zu leiten, wenn sich der Rotor (58), das erste Laufrad (74) und das zweite Laufrad (80) um die Rotorachse (RA) drehen.

5. Rotorbaugruppe (50) nach Anspruch 4, wobei das erste Laufrad (74) einen ersten Nabenabschnitt (102) aufweist und wobei das erste Laufrad (74) einen ersten Laufradarm (104), der sich von dem ersten Nabenabschnitt (102) und von der Rotorachse (RA) weg erstreckt und die Einlassöffnung (76) des ersten Laufrads (74) definiert, und einen zweiten Laufradarm (106) umfasst, der sich von dem ersten Nabenabschnitt (102) von der Rotorachse (RA) weg erstreckt und die Auslassöffnung (74) des ersten Laufrads (74) definiert.

6. Rotorbaugruppe (50) nach Anspruch 5, wobei der erste Nabenabschnitt (102) eine äußere erste Nabenoberfläche (108) aufweist, die zwischen dem ersten und dem zweiten Laufradarm (104, 106) des ersten Laufrads (74) angeordnet ist, wobei die äußere erste Nabenoberfläche (108) einen äußeren ersten Nabenradius (R5) zwischen der äußeren ersten Nabenoberfläche (108) und der Rotorachse (RA) definiert, und wobei der erste und der zweite Laufradarm (104, 106) des ersten Laufrads (74) in Bezug auf die Rotorachse (RA) aus der äußeren ersten Nabenoberfläche (108) herausragen,
optional wobei die Auslassöffnung (78) des ersten Laufrads (74) in Bezug auf die Rotorachse (RA) außerhalb des äußeren ersten Nabenradius (R5) angeordnet ist, und optional wobei die Einlassöffnung (76) des ersten Laufrads (74) in Bezug auf die Rotorachse (RA) außerhalb des äußeren ersten Nabenradius (R5) angeordnet ist.

7. Rotorbaugruppe (50) nach einem der vorhergehenden Ansprüche, wobei das zweite Laufrad (80) einen zweiten Nabenabschnitt (118) aufweist und wobei das zweite Laufrad (80) einen ersten Laufradarm (120), der sich von dem zweiten Nabenabschnitt (118) und von der Rotorachse (RA) weg erstreckt und die Einlassöffnung (82) des zweiten Laufrads (80) definiert, und einen zweiten Laufradarm (122) umfasst, der sich von dem zweiten Nabenabschnitt (118) von der Rotorachse (RA) weg erstreckt und die Auslassöffnung (84) des zweiten Laufrads (80) definiert.

8. Rotorbaugruppe (50) nach einem der vorhergehenden Ansprüche, wobei das erste Laufrad (74) eine erste Laufradfläche (110) aufweist, die dem Rotor zugewandt ist, und wobei die Auslassöffnung (78) des ersten Laufrads (74) durch die erste Laufradfläche (112) des ersten Laufrads (74) definiert ist, optional wobei das erste Laufrad (74) eine zweite Laufradfläche (112) gegenüber der ersten Laufradfläche (110) des ersten Laufrads (74) in Bezug auf die Rotorachse (RA) aufweist, wobei das erste Laufrad (74) eine erste Laufraddicke (114) aufweist, die zwischen der ersten und der zweiten Laufradfläche (110, 112) definiert ist, und wobei die Auslassöffnung des ersten Laufrads (74) eine Auslasstiefe (116) in Bezug auf die Rotorachse (RA) aufweist, die kleiner als die erste Laufraddicke (114) ist.

9. Rotorbaugruppe (50) nach einem der vorhergehenden Ansprüche, wobei der Rotor (58) einen dritten Kühlkanal (134), der sich von dem ersten Rotorende (60) zu dem zweiten Rotorende (62) erstreckt, und einen vierten Kühlkanal (136) definiert, der sich von dem ersten Rotorende (60) zu dem zweiten Rotorende (62) erstreckt; wobei das erste Laufrad (74) eine zweite Einlassöffnung (138) definiert, die auf den dritten Kühlkanal (134) ausgerichtet ist, und wobei das erste Laufrad (74) eine zweite Auslassöffnung (140) definiert, die auf den vierten Kühlkanal (136) ausgerichtet ist;
wobei das zweite Laufrad (80) eine zweite Einlassöffnung (142) definiert, die auf den vierten Kühlkanal (136) und die zweite Auslassöffnung (140) des ersten Laufrads (74) ausgerichtet ist, und wobei das zweite Laufrad (80) eine zweite Auslassöffnung (144) definiert, die auf den dritten Kühlkanal (134) und die zweite Einlassöffnung (138) des ersten Laufrads (74) ausgerichtet ist; wobei ein dritter Ölkanal konfiguriert ist, um Öl angrenzend an das erste Laufrad (74)zu dem dritten Kühlkanal (134) zu leiten; und
wobei ein vierter Ölkanal konfiguriert ist, um Öl angrenzend an das zweite Laufrad (80) zu dem vierten Kühlkanal (136) zu leiten;
wobei der dritte Ölkanal fluidisch mit dem dritten Kühlkanal (134) gekoppelt ist, sodass Öl und Luft während des Betriebs der Rotorbaugruppe (50) innerhalb des dritten Kühlkanals (134) gemischt werden, und wobei der vierte Ölkanal fluidisch mit dem vierten Kühlkanal (136) gekoppelt ist, sodass Öl und Luft während des Betriebs der Rotorbaugruppe (50) innerhalb des vierten Kühlkanals (136) gemischt werden.

10. Rotorbaugruppe (50) nach Anspruch 9, wobei der dritte Ölkanal direkt fluidisch mit der zweiten Einlassöffnung des ersten Laufrads (74) gekoppelt ist, sodass die zweite Einlassöffnung (138) des ersten Laufrads (74) konfiguriert ist, um Öl mit Luft in den dritten Kühlkanal (134) zu leiten und zu mischen, und wobei der vierte Ölkanal direkt fluidisch mit der zweiten Einlassöffnung (142) des zweiten Laufrads (80) gekoppelt ist, sodass die zweite Einlassöffnung (142) des zweiten Laufrads (80) konfiguriert ist, um Öl mit Luft in den vierten Kühlkanal (136) zu leiten und zu mischen.

11. Rotorbaugruppe (50) nach einem der Ansprüche 9 und 10, wobei die zweite Einlassöffnung (138) des ersten Laufrads (74) ein geometrisches Einlasszentrum (146) aufweist und wobei das geometrische Einlasszentrum (146) der zweiten Einlassöffnung (138) des ersten Laufrads (74) einen zweiten Einlassradius (R7) zwischen dem geometrischen Einlasszentrum (146) der zweiten Einlassöffnung (138) des ersten Laufrads (74) und der Rotorachse (RA) definiert;
wobei die zweite Auslassöffnung (144) des zweiten Laufrads (80) ein geometrisches Auslasszentrum (148) aufweist und wobei das geometrische Auslasszentrum (148) der zweiten Auslassöffnung (144) des zweiten Laufrads (80) einen zweiten Auslassradius (R8) zwischen dem geometrischen Auslasszentrum (148) der zweiten Auslassöffnung (144) des zweiten Laufrads (80) und der Rotorachse (RA) definiert; wobei die zweite Einlassöffnung (142) des zweiten Laufrads (80) ein geometrisches Einlasszentrum (150) aufweist und wobei das geometrische Einlasszentrum (150) der zweiten Einlassöffnung (142) des zweiten Laufrads (80) einen zweiten Einlassradius (R9) zwischen dem geometrischen Einlasszentrum (150) der zweiten Einlassöffnung (142) des zweiten Laufrads (80) und der Rotorachse (RA) definiert; und
wobei die zweite Auslassöffnung (140) des ersten Laufrads (74) ein geometrisches Auslasszentrum (152) aufweist und wobei das geometrische Auslasszentrum (152) der zweiten Auslassöffnung (140) des ersten Laufrads (74) einen zweiten Auslassradius (R10) zwischen dem geometrischen Auslasszentrum (152) der zweiten Auslassöffnung (140) des ersten Laufrads (74) und der Rotorachse (RA) definiert.

12. Rotorbaugruppe (50) nach Anspruch 11, wobei der zweite Auslassradius (R8), der zwischen dem geometrischen Auslasszentrum (148) der zweiten Auslassöffnung (144) des zweiten Laufrads (80) definiert ist, größer ist als der zweite Einlassradius (R7), der zwischen dem geometrischen Einlasszentrum (146) der zweiten Einlassöffnung (138) des ersten Laufrads (74) definiert ist, sodass das erste und das zweite Laufrad (74, 80) geeignet sind, um einen Fluidstrom der Luft und des Öls in der ersten Richtung durch den dritten Kühlkanal (134) vom ersten Rotorende (60) zum zweiten Rotorende (62) zu leiten, wenn sich der Rotor (58), das erste Laufrad (74) und das zweite Laufrad (80) um die Rotorachse (RA) drehen, und wobei der zweite Auslassradius (R10), der zwischen dem geometrischen Auslasszentrum (152) der zweiten Auslassöffnung (140) des ersten Laufrads (74) definiert ist, größer ist als der zweite Einlassradius (R9), der zwischen dem geometrischen Einlasszentrum (150) der zweiten Einlassöffnung (142) des zweiten Laufrads (80) definiert ist, sodass das erste und das zweite Laufrad (74, 80) geeignet sind, um einen Fluidstrom der Luft und des Öls in der zweiten Richtung entgegengesetzt zur ersten Richtung durch den vierten Kühlkanal (136) vom zweiten Rotorende (62) zum ersten Rotorende (60) zu leiten, wenn sich der Rotor (58), das erste Laufrad (74) und das zweite Laufrad (80) um die Rotorachse (RA) drehen.

13. Rotorbaugruppe (50) nach einem der vorhergehenden Ansprüche, die ferner eine Vielzahl von Magneten (98) umfasst, die in dem Rotor (58) angeordnet sind, wobei der Rotor (58) eine Vielzahl von Magnetkanälen (100) definiert, die an die Magnete (98) angrenzen, wobei die Vielzahl von Magnetkanälen (100) hohl sind und wobei das erste Laufrad (74) eine Magnetöffnung definiert, die konfiguriert ist, um auf mindestens einen der Magnetkanäle (100) aus der Vielzahl von Magnetkanälen (100) ausgerichtet zu sein, und wobei das zweite Laufrad (80) eine Magnetöffnung definiert, die konfiguriert ist, um auf mindestens einen der Magnetkanäle (100) aus der Vielzahl von Magnetkanälen (100) ausgerichtet zu sein.

14. Elektrische Maschine (52), welche die Rotorbaugruppe (50) nach einem der vorhergehenden Ansprüche umfasst und die ferner umfasst:
eine Welle (64), die sich entlang der Rotorachse (RA) erstreckt, wobei der Rotor (58) einen Rotorinnenraum (66) definiert und wobei die Welle (64) in dem Rotorinnenraum (66) angeordnet und mit dem Rotor (58) gekoppelt ist; und
einen Stator (68), der mit dem Rotor (58) gekoppelt ist und in Bezug auf den Rotor (58) um diesen herum angeordnet ist; wobei die Welle (64) mindestens einen Abschnitt des ersten Ölkanals (192) und des zweiten Ölkanals (194) definiert.

15. Elektrische Maschine (52) nach Anspruch 14, wobei der erste Ölkanal (192) durch die Welle (64) definiert wird, um Öl angrenzend an das erste Laufrad (74) zu dem ersten Kühlkanal (70) zu leiten, und wobei der zweite Ölkanal (194) durch die Welle definiert wird, um Öl angrenzend an das zweite Laufrad (80) zu dem zweiten Kühlkanal (72) zu leiten.

16. Elektrische Maschine (52) nach einem der Ansprüche 14 und 15, wobei der erste Laufradarm des ersten Laufrads (74) einen Wirbelkanal zwischen dem ersten Laufradarm und dem Stator definiert.

## Revendications

1. Ensemble rotor (50) destiné à être utilisé dans une machine électrique (52), ledit ensemble rotor (50) comprenant :
un rotor (58) s'étendant le long et adapté pour pouvoir tourner autour d'un axe de rotor (RA), ledit rotor (58) présentant une première extrémité (60) de rotor et une seconde extrémité (62) de rotor écartée de ladite première extrémité (60) de rotor par rapport audit axe de rotor (RA), ledit rotor (58) définissant un premier conduit (70) de refroidissement s'étendant de ladite première extrémité (60) de rotor à ladite seconde extrémité (62) de rotor, et ledit rotor (58) définissant un deuxième conduit (72) de refroidissement s'étendant de ladite première extrémité (60) de rotor jusqu'à ladite seconde extrémité (62) de rotor ;
un premier rouet (74) couplé à ladite première extrémité (60) de rotor, ledit premier rouet (74) définissant une ouverture (76) d'entrée alignée avec ledit premier conduit (70) de refroidissement, et ledit premier rouet (74) définissant une ouverture (78) de sortie alignée avec ledit deuxième conduit (72) de refroidissement ; et
un deuxième rouet (80) couplé à ladite seconde extrémité (62) de rotor de telle sorte que ledit rotor (58) est disposé entre ledit premier rouet (74) et ledit deuxième rouet (80) par rapport audit axe de rotor (RA), ledit deuxième rouet (80) définissant une ouverture (82) d'entrée alignée avec ledit deuxième conduit (72) de refroidissement et ladite ouverture (78) de sortie dudit premier rouet (74), et ledit deuxième rouet (80) définissant une ouverture (84) de sortie alignée avec ledit premier conduit (70) de refroidissement et ladite ouverture (76) d'entrée dudit premier rouet (74) ;
**caractérisé par** un premier canal (192) d'huile configuré pour diriger de l'huile vers ledit premier conduit (70) de refroidissement adjacent audit premier rouet (74) ; et
un deuxième canal (194) d'huile configuré pour diriger de l'huile vers ledit deuxième conduit (72) de refroidissement adjacent audit deuxième rouet (80) ;
ledit premier canal (192) d'huile étant couplé fluidiquement audit premier conduit (70) de refroidissement de telle sorte que de l'huile et de l'air sont mélangés à l'intérieur dudit premier conduit (70) de refroidissement pendant le fonctionnement de l'ensemble rotor (50), et ledit deuxième canal (194) d'huile étant couplé fluidiquement audit deuxième conduit (72) de refroidissement de telle sorte que de l'huile et de l'air sont mélangés à l'intérieur dudit deuxième conduit (72) de refroidissement pendant le fonctionnement de l'ensemble rotor (50).

2. Ensemble rotor (50) selon la revendication 1, ladite première extrémité (60) de rotor présentant une première face (94) de rotor et ladite seconde extrémité (62) de rotor présentant une seconde face (96) de rotor orientée à l'opposé de ladite première face (94) de rotor par rapport audit axe de rotor (RA), ledit premier canal (192) d'huile étant défini entre ladite première face (94) de rotor et ledit premier rouet (74), et ledit deuxième canal (194) d'huile étant défini entre ladite deuxième face (96) de rotor et ledit deuxième rouet (80).

3. Ensemble rotor (50) selon la revendication 2, ledit premier canal (192) d'huile étant directement couplé fluidiquement à ladite ouverture (76) d'entrée dudit premier rouet (74) de telle sorte que ladite ouverture (76) d'entrée dudit premier rouet (74) est configurée pour diriger et mélanger de l'huile avec de l'air dans ledit premier conduit (70) de refroidissement, et ledit deuxième canal (194) d'huile étant directement couplé fluidiquement à ladite ouverture (82) d'entrée dudit deuxième rouet (80) de telle sorte que ladite ouverture (82) d'entrée dudit deuxième rouet (80) est configurée pour diriger et mélanger de l'huile avec de l'air dans ledit deuxième conduit (72) de refroidissement.

4. Ensemble rotor (50) selon l'une quelconque des revendications précédentes, ladite ouverture (76) d'entrée dudit premier rouet (74) présentant un centre géométrique (86) d'entrée, et ledit centre géométrique (86) d'entrée de ladite ouverture (76) d'entrée dudit premier rouet (74) définissant un premier rayon d'entrée (R1) entre ledit centre géométrique (86) d'entrée de ladite ouverture (76) d'entrée dudit premier rouet (74) et ledit axe de rotor (RA),
ladite ouverture (84) de sortie dudit deuxième rouet (80) présentant un centre géométrique (88) de sortie et ledit centre géométrique (88) de sortie de ladite ouverture (84) de sortie dudit deuxième rouet (80) définissant un premier rayon de sortie (R2) entre ledit centre géométrique (88) de sortie de ladite ouverture (84) de sortie dudit deuxième rouet (80) et ledit axe de rotor (RA),
ladite ouverture (82) d'entrée dudit deuxième rouet (80) présentant un centre géométrique (90) d'entrée, et ledit centre géométrique (90) d'entrée de ladite ouverture (82) d'entrée dudit deuxième rouet (80) définissant un premier rayon d'entrée (R3) entre ledit centre géométrique (90) d'entrée de ladite ouverture (82) d'entrée dudit deuxième rouet (80) et ledit axe de rotor (RA),
ladite ouverture (78) de sortie dudit premier rouet (74) présentant un centre géométrique (92) de sortie, et ledit centre géométrique (92) de sortie de ladite ouverture (78) de sortie dudit premier rouet (74) définissant un premier rayon de sortie (R4) entre ledit centre géométrique (92) de sortie de ladite ouverture (78) de sortie dudit premier rouet (74) et ledit axe de rotor (RA), et
ledit premier rayon de sortie (R2) défini entre ledit centre géométrique (88) de sortie de ladite ouverture (84) de sortie dudit deuxième rouet (80) et ledit axe de rotor (RA) étant supérieur audit premier rayon d'entrée (R1) défini entre ledit centre géométrique (86) d'entrée de ladite ouverture (76) d'entrée dudit premier rouet (74) et ledit axe de rotor (RA) de telle sorte que lesdits premier et deuxième rouets (74, 80) sont adaptés pour diriger l'écoulement de fluide de l'air et de l'huile dans une première direction à travers ledit premier conduit (70) de refroidissement depuis ladite première extrémité (60) de rotor vers ladite seconde extrémité (62) de rotor lorsque ledit rotor (58), ledit premier rouet (74) et ledit deuxième rouet (80) tournent autour dudit axe de rotor (RA), et ledit premier rayon de sortie (R4) défini entre ledit centre géométrique (92) de sortie de ladite ouverture (78) de sortie dudit premier rouet (74) et ledit axe de rotor (RA) étant supérieur audit premier rayon d'entrée (R3) défini entre ledit centre géométrique (90) d'entrée de ladite ouverture (82) d'entrée dudit deuxième rouet (80) et ledit axe de rotor (RA) de telle sorte que lesdits premier et deuxième rouets (74, 80) sont adaptés pour diriger l'écoulement de fluide de l'air et de l'huile dans une seconde direction opposée à ladite première direction à travers ledit deuxième conduit (72) de refroidissement depuis ladite seconde extrémité (62) de rotor vers ladite première extrémité (60) de rotor lorsque ledit rotor (58), ledit premier rouet (74) et ledit deuxième rouet (80) tournent autour dudit axe de rotor (RA).

5. Ensemble rotor (50) selon la revendication 4, ledit premier rouet (74) possédant une première partie (102) de moyeu, et ledit premier rouet (74) comprenant un premier bras (104) de rouet s'étendant à partir de ladite première partie (102) de moyeu en s'éloignant dudit axe de rotor (RA) et définissant ladite ouverture (76) d'entrée dudit premier rouet (74), et un deuxième bras (106) de rouet s'étendant à partir de ladite première partie (102) de moyeu en s'éloignant dudit axe de rotor (RA) et définissant ladite ouverture (74) de sortie dudit premier rouet (74).

6. Ensemble rotor (50) selon la revendication 5, dans lequel ladite première partie (102) de moyeu présentant une première surface extérieure (108) de moyeu disposée entre lesdits premier et deuxième bras (104, 106) de rouet dudit premier rouet (74), ladite première surface extérieure (108) de moyeu définissant un premier rayon extérieur de moyeu (R5) entre ladite première surface extérieure (108) de moyeu et ledit axe de rotor (RA), et lesdits premier et deuxième bras (104, 106) de rouet dudit premier rouet (74) faisant saillie à l'écart de ladite première surface extérieure (108) de moyeu par rapport audit axe de rotor (RA), éventuellement
ladite ouverture (78) de sortie dudit premier rouet (74) étant disposée à l'extérieur dudit premier rayon extérieur de moyeu (R5) par rapport audit axe de rotor (RA), et éventuellement
ladite ouverture (76) d'entrée dudit premier rouet (74) étant disposée à l'extérieur dudit premier rayon extérieur de moyeu (R5) par rapport audit axe de rotor (RA).

7. Ensemble rotor (50) selon l'une quelconque des revendications précédentes, ledit deuxième rouet (80) possédant une deuxième partie (118) de moyeu, et ledit deuxième rouet (80) comprenant un premier bras (120) de rouet s'étendant à partir de ladite deuxième partie (118) de moyeu en s'éloignant dudit axe de rotor (RA) et définissant ladite ouverture (82) d'entrée dudit deuxième rouet (80), et un deuxième bras (122) de rouet s'étendant à partir de ladite deuxième partie (118) de moyeu en s'éloignant dudit axe de rotor (RA) et définissant ladite ouverture (84) de sortie dudit deuxième rouet (80).

8. Ensemble rotor (50) selon l'une quelconque des revendications précédentes, ledit premier rouet (74) présentant une première surface (110) de rouet faisant face audit rotor, et ladite ouverture (78) de sortie dudit premier rouet (74) étant définie par ladite première surface (112) de rouet dudit premier rouet (74), ledit premier rouet (74) présentant éventuellement une deuxième surface (112) de rouet opposée à ladite première surface (110) de rouet dudit premier rouet (74) par rapport audit axe de rotor (RA), ledit premier rouet (74) présentant une première épaisseur (114) de rouet définie entre lesdites première et deuxième surfaces de rouet (110, 112) dudit premier rouet (74) et ladite ouverture de sortie dudit premier rouet (74) présentant une profondeur (116) de sortie par rapport audit axe de rotor (RA) qui est inférieure à ladite première épaisseur (114) de rouet.

9. Ensemble rotor (50) selon l'une quelconque des revendications précédentes, ledit rotor (58) définissant un troisième conduit (134) de refroidissement s'étendant de ladite première extrémité (60) de rotor à ladite seconde extrémité (62) de rotor, et un quatrième conduit (136) de refroidissement s'étendant de ladite première extrémité (60) de rotor à ladite seconde extrémité (62) de rotor ;
ledit premier rouet (74) définissant une deuxième ouverture (138) d'entrée alignée avec ledit troisième conduit (134) de refroidissement, et ledit premier rouet (74) définissant une deuxième ouverture (140) de sortie alignée avec ledit quatrième conduit (136) de refroidissement ;
ledit deuxième rouet (80) définissant une deuxième ouverture (142) d'entrée alignée avec ledit quatrième conduit (136) de refroidissement et ladite deuxième ouverture (140) de sortie dudit premier rouet (74), et ledit deuxième rouet (80) définissant une deuxième ouverture (144) de sortie alignée avec ledit troisième conduit (134) de refroidissement et ladite deuxième ouverture (138) d'entrée dudit premier rouet (74) ; un troisième canal d'huile configuré pour diriger de l'huile vers ledit troisième conduit (134) de refroidissement adjacent audit premier rouet (74) ; et
un quatrième canal d'huile configuré pour diriger de l'huile vers ledit quatrième conduit (136) de refroidissement adjacent audit deuxième rouet (80) ;
ledit troisième canal d'huile étant couplé fluidiquement audit troisième conduit (134) de refroidissement de sorte que l'huile et l'air sont mélangés à l'intérieur dudit troisième conduit (134) de refroidissement pendant le fonctionnement de l'ensemble rotor (50), et ledit quatrième canal d'huile étant couplé fluidiquement audit quatrième conduit (136) de refroidissement de sorte que l'huile et l'air sont mélangés à l'intérieur dudit quatrième conduit (136) de refroidissement pendant le fonctionnement de l'ensemble rotor (50).

10. Ensemble rotor (50) selon la revendication 9, ledit troisième canal d'huile étant directement couplé fluidiquement à ladite deuxième ouverture d'entrée dudit premier rouet (74) de telle sorte que ladite deuxième ouverture (138) d'entrée dudit premier rouet (74) est configurée pour diriger et mélanger de l'huile avec de l'air dans ledit troisième conduit (134) de refroidissement, et ledit quatrième canal d'huile étant directement couplé fluidiquement à ladite deuxième ouverture (142) d'entrée dudit deuxième rouet (80) de telle sorte que ladite deuxième ouverture (142) d'entrée dudit deuxième rouet (80) est configurée pour diriger et mélanger de l'huile avec de l'air dans ledit quatrième conduit (136) de refroidissement.

11. Ensemble rotor (50) selon l'une quelconque des revendications 9 et 10, ladite deuxième ouverture (138) d'entrée dudit premier rouet (74) présentant un centre géométrique (146) d'entrée, et ledit centre géométrique (146) d'entrée de ladite deuxième ouverture (138) d'entrée dudit premier rouet (74) définissant un deuxième rayon d'entrée (R7) entre ledit centre géométrique (146) d'entrée de ladite deuxième ouverture (138) d'entrée dudit premier rouet (74) et ledit axe de rotor (RA) ;
ladite deuxième ouverture (144) de sortie dudit deuxième rouet (80) présentant un centre géométrique (148) de sortie et ledit centre géométrique (148) de sortie de ladite deuxième ouverture (144) de sortie dudit deuxième rouet (80) définissant un deuxième rayon de sortie (R8) entre ledit centre géométrique (148) de sortie de ladite deuxième ouverture (144) de sortie dudit deuxième rouet (80) et ledit axe de rotor (RA) ;
ladite deuxième ouverture (142) d'entrée dudit deuxième rouet (80) présentant un centre géométrique (150) d'entrée, et ledit centre géométrique (150) d'entrée de ladite deuxième ouverture (142) d'entrée dudit deuxième rouet (80) définissant un deuxième rayon d'entrée (R9) entre ledit centre géométrique (150) d'entrée de ladite deuxième ouverture (142) d'entrée dudit deuxième rouet (80) et ledit axe de rotor (RA) ; et
la deuxième ouverture (140) de sortie dudit premier rouet (74) présentant un centre géométrique (152) de sortie, et ledit centre géométrique (152) de sortie de ladite deuxième ouverture (140) de sortie dudit premier rouet (74) définissant un deuxième rayon de sortie (R10) entre ledit centre géométrique (152) de sortie de ladite deuxième ouverture (140) de sortie dudit premier rouet (74) et ledit axe de rotor (RA).

12. Ensemble rotor (50) selon la revendication 11, ledit deuxième rayon de sortie (R8) défini entre ledit centre géométrique (148) de sortie de ladite deuxième ouverture (144) de sortie dudit deuxième rouet (80) étant supérieur audit deuxième rayon d'entrée (R7) défini entre ledit centre géométrique (146) d'entrée de ladite deuxième ouverture (138) d'entrée dudit premier rouet (74) de sorte que lesdits premier et deuxième rouets (74, 80) sont adaptés pour diriger l'écoulement de fluide de l'air et de l'huile dans ladite première direction à travers ledit troisième conduit (134) de refroidissement depuis ladite première extrémité (60) de rotor vers ladite seconde extrémité (62) de rotor lorsque ledit rotor (58), ledit premier rouet (74) et ledit deuxième rouet (80) tournent autour dudit axe de rotor (RA), et ledit deuxième rayon de sortie (R10) défini entre ledit centre géométrique (152) de sortie de ladite deuxième ouverture (140) de sortie dudit premier rouet (74) étant supérieur audit deuxième rayon d'entrée (R9) défini entre ledit centre géométrique (150) d'entrée de ladite deuxième ouverture (142) d'entrée dudit deuxième rouet (80) de telle sorte que lesdits premier et deuxième rouets (74, 80) sont adaptés pour diriger l'écoulement de fluide de l'air et de l'huile dans ladite seconde direction opposée à ladite première direction à travers ledit quatrième conduit (136) de refroidissement depuis ladite seconde extrémité (62) de rotor vers ladite première extrémité (60) de rotor lorsque ledit rotor (58), ledit premier rouet (74) et ledit deuxième rouet (80) tournent autour dudit axe de rotor (RA).

13. Ensemble rotor (50) selon l'une quelconque des revendications précédentes, comprenant en outre une pluralité d'aimants (98) disposés dans ledit rotor (58), ledit rotor (58) définissant une pluralité de canaux (100) d'aimants adjacents auxdits aimants (98), les canaux de ladite pluralité de canaux (100) d'aimants étant creux, et ledit premier rouet (74) définissant une ouverture d'aimant configurée pour s'aligner avec au moins l'un desdits canaux (100) d'aimants de ladite pluralité de canaux (100) d'aimants, et ledit deuxième rouet (80) définissant une ouverture d'aimant configurée pour s'aligner avec au moins un desdits canaux (100) d'aimants de ladite pluralité de canaux (100) d'aimants.

14. Machine électrique (52) comprenant ledit ensemble rotor (50) selon l'une quelconque des revendications précédentes et comprenant en outre :
un arbre (64) s'étendant suivant ledit axe de rotor (RA), ledit rotor (58) définissant un intérieur (66) de rotor et ledit arbre (64) étant disposé dans ledit intérieur (66) de rotor et couplé audit rotor (58) ; et
un stator (68) couplé audit rotor (58) et disposé autour de celui-ci par rapport audit rotor (58) ; ledit arbre (64) définissant au moins une partie dudit premier canal (192) d'huile et dudit deuxième canal (194) d'huile.

15. Machine électrique (52) selon la revendication 14, ledit premier canal (192) d'huile étant défini par ledit arbre (64) pour diriger de l'huile vers ledit premier conduit (70) de refroidissement adjacent audit premier rouet (74), et ledit deuxième canal (194) d'huile étant défini par ledit arbre pour diriger de l'huile vers ledit deuxième conduit (72) de refroidissement adjacent audit deuxième rouet (80).

16. Machine électrique (52) selon l'une quelconque des revendications 14 et 15, ledit premier bras de rouet dudit premier rouet (74) définissant un canal tourbillonnaire entre ledit premier bras de rouet et ledit stator.
